# EUROPEAN PATENT SPECIFICATION

(11) **EP 3 226 608 B1**
(45) Date of publication and mention of the grant of the patent: **17.08.2022**
(21) Application number: 15863881.7
(22) Date of filing: 18.11.2015
(51) Int. Cl.: H04W 60/00, H04W 8/06, H04W 64/00

(54) **MOBILE COMMUNICATION METHOD**
MOBILKOMMUNIKATIONSVERFAHREN
PROCÉDÉ DE COMMUNICATIONS MOBILES

(30) Priority: 26.11.2014 CN 201410693496
(43) Date of publication of application: 04.10.2017
(73) Proprietor: Datang Mobile Communications Equipment Co., Ltd., Beijing 100085 (CN)
(72) Inventor: LIU, Jiamin, Beijing 100191 (CN); QIN, Fei, Beijing 100191 (CN)
(74) Representative: Körfer, Thomas
(86) International application number: PCT/CN2015/094940
(87) International publication number: WO 2016/082711

(56) References cited:
- WO-A1-2014/073540
- CN-A- 103 098 508
- CN-A- 103 634 802
- CN-A- 103 634 818
- CN-A- 103 634 818
- CN-A- 103 650 559
- CN-A- 103 650 565

## Description

### FIELD

The present application relates to the field of communication technologies, and particularly to a mobile communication method.

### BACKGROUND

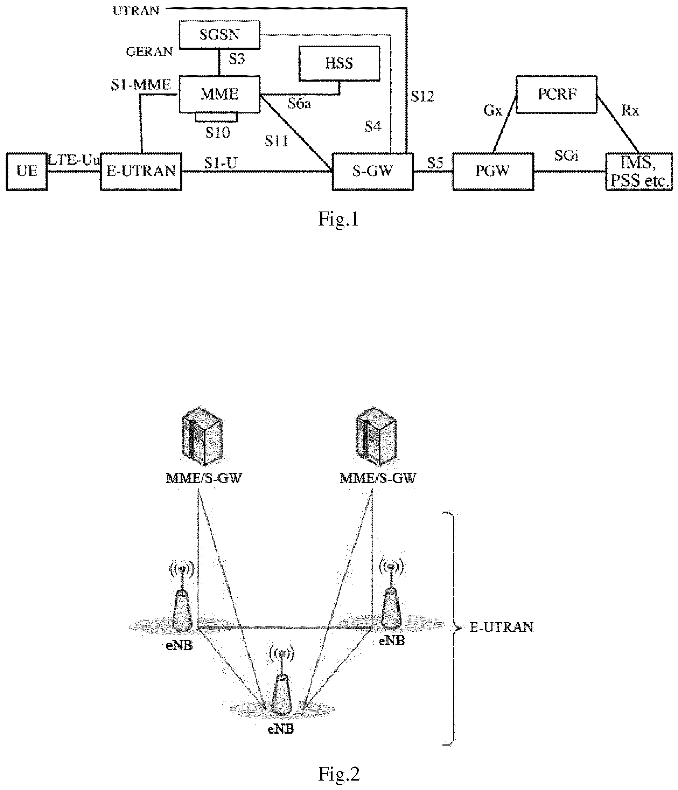

In a Long Term Evolution (LTE) network architecture illustrated in Fig.1, a Mobility Management Entity (MME) is responsible for mobility management and controlling session management as a control plane node in the network; a Serving Gateway (SGW) and a Packet Data Network Gateway (PGW) have both a function of control plane and a function of user plane; an Evolved Universal Mobile Telecommunications System (UMTS) terrestrial Radio Access Network (E-UTRAN) mainly consists of evolved Node Bs (eNB), responsible for air interface signaling and data transmission, signaling plane interaction with the MME and data forwarding with the SGW.

In the LTE network architecture, signaling of all the mobility management procedures are handled by the MME, including Attach procedure, Tracking Area Update (TAU) procedure, Service Request procedure, Paging procedure, Handover procedure and Detach procedure; signaling of all the session management procedures also needs to be controlled by the MME, such as connection of a Packet Data Network (PDN), establishment, maintenance and removal of an Evolved Packet System (EPS) bearer, or modification of Quality of Service (QoS).

In the aspect of data transmission, all uplink and downlink data of a terminal accessing to an eNB must be forwarded via an EPS bearer previously established on the SGW or PGW. In order to distribute data accessing the local network, the 3rd Generation Partnership Project (3GPP) proposed Local Internet Protocol (IP) Access (LIPA)/ Selected IP Traffic Offload (SIPTO) technology in its Rel 10 version, so that a terminal could access the local network directly via a Home Node B (HeNB) without via the SGW or the PGW.

As illustrated in Fig.2, in an LTE system, nodes on the network side are mostly connected by wire, that is, eNBs are connected by wired links, also eNBs and core network nodes (such as a MME or a SGW) are connected via wired links

In the future 5^{th} generation (5G) mobile communication network, various forms of terminals and service applications exist, where the terminals include smart phones, terminals in an internet of things and etc., applications include mobile internet applications and internet of things applications. Therefore, the number of terminals supported in the 5G network is huge, and depending on the differences of applications and scenes, demands for service are also very different, mainly represented in aspects of transmission rate, flow density and delay. According to expectations of Mobile and wireless communication Enablers for Twenty-twenty (2020) Information Society (METIS) project, uplink and downlink transmission rates in an virtual reality office need to reach 5G bits per second (bps), a total flow intensity of uplink and downlink in an open-air music festival needs to reach 900 Gbps per km², signaling transmission delay of attaching of a terminal in a shopping mall needs to be shorter than 5ms, and so on.

In addition, deployment of the future 5G network also demands energy-saving and cost-reduction, lowering network operators' investment and operating costs are expected.

Ultra-dense network is an important direction to deal with the large capacity of the future 5G network. Unlike the wide-area coverage of existing cellular networks, an ultra-dense network focuses on scenes like indoor and hotspot areas, and the traffic demand and user density are much higher than those of an existing cellular; the network access node density may reach the order of magnitude equivalent to the order of magnitude of users, the coverage characteristics are represented as heterogeneous, overlapping and multi-layer coverage, and backhaul characteristics are also quite complex and diverse (for example, ideal or non-ideal, wired or wireless).

Since the future 5G network demands a denser number of access points, more kinds of access points, flexible backhauls, equivalence between the number of users and the number of access points, simpler user functions, higher user rate and other experience requirements, which brings to traditional network architectures great challenges that are mainly in the following aspects.
1. With respect to the tendency of removing cells in an ultra-dense network, it is needed to weaken the functions of an access point, and signal processing, mobility management and wireless resource management are no longer suitable to be handled independently in a case of using a cell as a unit.
2. In an existing network architecture, user plane and control plane have a strong coupling relationship, resulting to problems such as frequent switching between the user plane and the control plane, inflexible accessing modes and low utilization of resources.
3. The functions of a local gateway in an existing network structure are too simple to support user-oriented services.
4. The locations of mobility anchors (MME and PGW) are too high, which leads to a lot of switching signaling and excessive roundabout transmission.
5. The management location of QoS is too high to be beneficial to perceive the wireless environment of every user and a "private customized" QoS service in an ultra-dense network with a smaller cost.
6. An existing encryption and authentication security mechanism is embodied in strict management and control of users by a network, unsuitable for the user-oriented services concept in a future network.
7. An existing network architecture and interface can't support flexible access types, complicated amorphous cell structures and heterogeneous multi-layer coverage modes.
8. A closed General Packet Radio Service (GPRS) Tunneling Protocol User Plane (GTP-U) dedicated channel is unsuitable for that mobile internet is the main user service in the future, which is difficult to make a user have initiative and flexibility on service demands.

Document CN 103634818 A discloses a measuring method and a measuring device of multi-user equipment as well as a method and a device for source allocating and relates to the technical field of communication. The measuring method comprises the steps of obtaining information of multiple UE (user equipment) accessed in the current cell on the same time frequency source; measuring the upstream signals of the multiple UE according to the information of the multiple UE in periods and only measuring one UE on the time frequency source in each period; the source allocating method comprises the steps of receiving the measuring information, of the multiple UE accessed to the current cell on the same time frequency source, reported by a measuring device; determining the moved target position group of each UE according to the measuring information of the multiple UE; for each UE, allocating the time frequency source for the UE on the target position group.

Therefore, it is needed to establish a mobile communication network adaptive to the demands of future 5G networks.

### SUMMARY

The embodiments of the present application provide mobile communication methods, to solve the problem that a traditional mobile communication network is unable to satisfy the requirements of a future 5G network

The specific technical solutions according to embodiments of the present application are described below

In a first aspect, a mobile communication method is provided, the mobile communication method is applied to a UE-centred network including a plurality of access points, APs, and a local service center, wherein the APs are configured to be an intermediate node to establish mobile communications between user equipments, UEs, between a user equipment, UE and the local service center, and between a UE and an external network, and to provide a radio signal channel for a UE, the local service center equals to a UE-centred local control plane and is configured to be an intermediate node to establish mobile communications between a UE and a network service center, between a UE and an external network, and between UEs, the method including:
monitoring, by the APs, an uplink signal sent by a UE adjacent to the APs;
obtaining, by the APs, first reporting information according to the uplink signal; wherein the first reporting information including measuring result of the uplink signal or the first reporting information is the uplink signal; the uplink signal is a registration request signal of the UE or is an uplink detection signal of the UE ; and
sending, by the APs, the first reporting information to the local service center serving the APs for processing ;
the method further includes:
receiving, by the APs, an instruction of performing a data transmission service for the UE sent by the local service center and/or an instruction of performing a mobility measurement service for the UE sent by the local service center.
receiving, by the APs, downlink date sending by the local service center;
sending, by the APs, the downlink date to the UE.

Preferred,obtaining, by the APs, first reporting information according to the uplink signal, includes:
processing, by the APs, the uplink signal in any one or a combination of radio frequency, physical layer, media access control layer, and radio link control (RLC) layer to obtain the first report information.

Preferred, the uplink signal is a registration request signal of the UE;
obtaining, by the APs, first reporting information according to the uplink signal, includes:
measuring, by the APs, the registration request signal of the UE, and generating, by the APs, the first reporting information according to a measuring result obtained by measuring the registration request signal of the UE and the registration request signal, or generating, by the APs, the first reporting information according to the measuring result obtained by, a measuring result obtained by previously measuring the uplink signal of the UE and the registration request signal.

Preferred, if the uplink signal is an uplink detection signal of the UE, obtaining, by the APs, the first reporting information according to the uplink signal, includes:
obtaining, by the APs, a measuring result by measuring the uplink detection signal of the UE, and generating, by the APs, the first reporting information according to the measuring result, where the first reporting information at least includes an identifier of the UE and includes current location information of the UE and/or an identifier of the APs.

Preferred, the current location information of the UE is the location information of the current APs which has received the uplink detection signal

Preferred, where the uplink detection signal is sent by the UE every set time interval, or is sent by the UE when the UE is triggered.

Preferred, if the uplink signal is a data transmission request, the data transmission request carries configuration information requested for protecting data transmission;
obtaining, by the APs, first reporting information according to the uplink signal, includes:
determining, by the APs, the data transmission request as the first reporting signal.

Preferred, the first reporting information further includes quality information of a link between the UE and the AP and relative location information of the UE and the APs.

In a second aspect, a mobile communication method is provided, the mobile communication method is applied to a UE-centred network including a plurality of access points, APs, and a local service center, wherein the APs are configured to be an intermediate node to establish mobile communications between user equipments, UEs, between a user equipment, UE and the local service center, and between a UE and an external network, and to provide a radio signal channel for a user equipment, UE, the local service center equals to a UE-centred local control plane and is configured to be an intermediate node to establish mobile communications between a UE and a network service center, between a UE and an external network, and between UEs; the method including:
receiving, by the local service center, first reporting information sent by the APs served by the local service center and adjacent to a UE, where the first reporting information is obtained by the APs according to an monitored uplink signal of the UE; wherein the first reporting information including measuring result of the uplink signal or the first reporting information is the uplink signal; the uplink signal is a registration request signal of the UE or is an uplink detection signal of the UE ; and
processing, by the local service center, the first reporting information ;
the method further includes:
   searching, by the local service center, configuration information of the UE, and;
   determing, by the local service center, the APs corresponding to the UE, where the configuration information at least includes a corresponding relationship between an identifier the UE and an identifier of an adjacent AP;
   sending, by the local service center, to a part of APs among the APs an instruction of performing a data transmission service for the UE and/or an instruction of performing a mobility mesurement service for the UE;
   obtaining, by the local service center, downlink data;
   transmitting, by the local service center, downlink data to the determined APs so that the determined APs transmits the downlink data to the UE.

Preferred, processing, by the local service center, the first reporting information, includes:
generating, by the local service center, second reporting information according to the first reporting information, includes:
1) wherein the first reporting information is generated by the APs according to a measuring result obtained by measuring a registration request signal of the UE and the registration request signal, or, generated by the APs according to the measuring result obtained by measuring a registration request signal of the UE, a measuring result obtained by measuring an uplink signal of the UE before the registration request signal, and the registration request signal;
   analyzing, by the local service center, the registration request signal to obtain registration information of the UE, and determining, by the local service center, the registration information, an identifier of the local service center and an identifier the UE as the second reporting information;
   or,
   determining, by the local service center, the first reporting information and the identifier of the local service center as the second reporting information;
2) wherein the first reporting information is a data transmission request of the UE received by the APs, wherein the data transmission request carries configuration information requested for protecting data transmission;
   configuring, by the local service center, air interface resources for data transmission for the UE according to the data transmission request or instructing, by the local service center, the APs to configure air interface resources for data transmission, and determining, by the local service center, the data transmission request as the second reporting information; and
   sending, by the local service center, the second reporting information to a network service center, so that the network service center provides a communication service for the UE according to the second reporting information.

Preferred, the first reporting information is generated by the APs according to a measuring result obtained by measuring an uplink detection signal of the UE, where the first reporting information at least includes an identifier of the UE and an identifier of the AsP;
processing, by the local service center, the first reporting information, includes:
determining, by the local service center, that configuration information of the UE is locally stored, comparing, by the local service center, an AP set included in the configuration information of the UE and an AP set consisting of the APs, and updating, by the local service center, the AP set of the UE in the configuration information to be the AP set consisting of the APs when determining that a preset update condition is satisfied;
or,
determining, by the local service center, that configuration information of the UE is not stored locally, configuring, by the local service center, transmission resources for the UE according to the first reporting information and saving, by the local service center, the transmission resources and a set consisting of the APs as the configuration information of the UE.

Preferred, after determining, by the local service center, that a preset update condition is satisfied, the method further includes:
re-determining and configuring, by the local service center, transmission resources of the UE according to the AP set consisting of the APs;
the update condition comprise one of the flowing situations:
for an existing AP in the AP set in the configuration information of the UE, if the quality of the link between the existing AP and the UE is lower than a preset threshold, the existing AP is deleted from the AP set;
for an AP outside the AP set in the configuration information of the UE, if the quality of the link between the AP and the UE is higher than a preset threshold, the AP is added into the AP set in the configuration information of the UE;
if the UE's transmission requirement is lower than a preset threshold, any AP whose link quality is lower than a preset threshold in the AP set in the configuration information of the UE is removed;
if the UE's transmission requirement is higher than a preset threshold, and if the quality of the link between an AP outside the AP set in the configuration information of the UE and the UE is higher than a preset threshold, the AP is added into the AP set in the configuration information;
for an AP outside the AP set in the configuration information of the UE, if the AP's load is determined to be lower than a preset threshold according to the AP's load information, the AP is added into the AP set in the configuration information of the UE;
for an existing AP in the AP set in the configuration information of the UE, if the existing AP's load is determined to be higher than a preset threshold according to the existing AP's load information, the existing AP is deleted from the AP set.

Preferred, the first reporting information is generated by the APs according to a measuring result obtained by measuring an uplink detection signal of the UE, where the first reporting information at least includes an identifier of the UE and current location information of the UE;
processing, by the local service center, the first reporting information, includes:
determining, by the local service center, that configuration information of the UE is locally stored, comparing, by the local service center, location information of the UE in the configuration information of the UE and the received current location information of the UE, updating, by the local service center, the location information of the UE in the configuration information to be the current location information of the UE when determining that a location information update condition is satisfied,, and re-determining and configuring, by the local service center, transmission resources of the UE;
or,
determining, by the local service center, that configuration information of the UE is not stored locally, configuring, by the local service center, transmission resources for the UE according to the first reporting information and saving, by the local service center, the transmission resources and the current location information of the UE as the configuration information.

Preferred, after determining, by the local service center, that the configuration information of the UE is not stored locally, the method further includes:
sending, by the local service center, its own identifier to a network service center, so that the network service center modifies a locally stored identifier of the local service center corresponding to the UE according to the identifier of the local service center.

Preferred, the current location information of the UE is location information of the current APs which have received the uplink detection signal.

Preferred, the uplink detection signal is sent by the UE every set time interval, or is sent by the UE when the UE is triggered.

Preferred, the first reporting information further includes quality information of a link between the UE and the AP and the relative location information of the UE and the APs.

Based on the above mentioned technical solutions, in the embodiments of the application, at least one AP monitors an uplink signal of UE to obtain first reporting information, and reports the first reporting information to a local service center serving the at least one AP, and the local service center provides a communication service for the UE according to the first reporting information. By deploying a large number of APs and local service centers with simplified functions, a more flexible and more complicated access mode is realized, a user's communication requirements could be perceived with a user equipment as the center, and, with a local service center as a mobility anchor and mobility management center, the mobility anchor's position is lowered and signal transmission process is simplified. A network service center performs service strategy management on the local service centers, which simplifies the management function of the core network. Moreover, the interfaces among an AP, a local service center and a network service center are open, able to support flexible access types, complicated amorphous cell structures and heterogeneous multi-layer coverage modes.

### BRIEF DESCRIPTION OF THE DRAWINGS

Fig.1 is a schematic diagram of an existing LTE network architecture.
Fig.2 is a schematic diagram of an existing connection relationship of network nodes.
Fig.3 is a schematic diagram of UE-centred network architecture according to embodiments of the present application.
Fig.4 is a flow chart of a method for an AP to realize mobile communication according to embodiments of the present application.
Fig.5 is a flow chart of a method for a local service center to realize mobile communication according to embodiments of the present application.
Fig.6 is a flow chart of a method for a network service center to realize mobile communication according to embodiments of the present application.
Fig.7 is a flow chart of a downlink data transmission method according to embodiments of the present application.
Fig.8 is a schematic diagram of a mobile communication system architecture according to embodiments of the present application.
Fig.9 is a structural schematic diagram of an access point device according to embodiments of the present application.
Fig.10 is a structural schematic diagram of another access point device according to embodiments of the present application.
Fig.11 is a structural schematic diagram of a network device according to embodiments of the present
Fig.12 is a structural schematic diagram of another network device according to embodiments of the present application.
Fig.13 is a structural schematic diagram of another network device according to embodiments of the present application.
Fig.14 is a structural schematic diagram of another network device according to embodiments of the present application.
Fig.15 is a structural schematic diagram of another network device according to embodiments of the present application.
Fig.16 is a structural schematic diagram of another network device according to embodiments of the present application.

### DETAILED DESCRIPTION

For the requirements of future 5G networks, embodiments of the present application proposes a UE-centred network, where the UE-centred network is defined as network which dynamically adapts to user equipment's needs of mobility and Quality of Service (QoS), and provides for user equipment services such as network planning, mobility service, business experience service and radio resources management. The user equipment communicates with a single, stable service network all the time without any cognition of switching on the network side; the user equipment submits a service requirement according to its needs, the network intelligently matches and builds a wireless environment to support the service requirement.

In the UE-centred network, a user doesn't need to perform any related wireless environment detections and network management processes such as radio resource control (RRC) measurement, switching measurement, and radio link detection. A user has a greater initiative and more options in the network and the network does its utmost to serve the user.

In the UE-centred network, the network perceives a need of user equipment, provides a service for the user on the basis of the need of the user equipment; perceives the radio environment of the user equipment, and selects a suitable access point and access mode so that the user equipment accesses the network; provides services such as access services, mobility services and resource management.

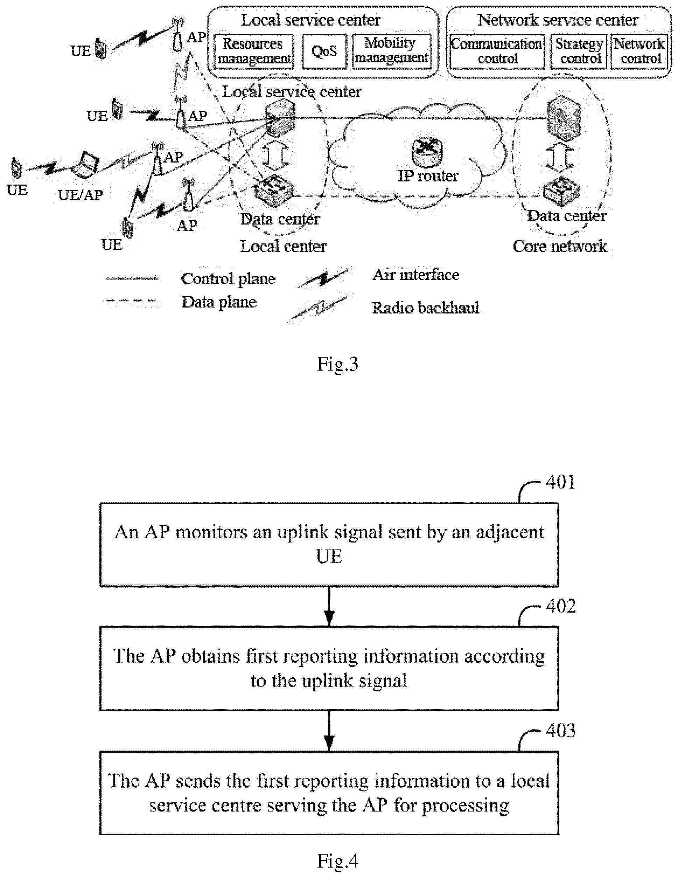

According to embodiments of the present application, as illustrated in Fig.3, in the UE-centred network, large amounts of access points (APs) and local service centers are distributed, wherein an AP is configured to provide a radio signal channel for a user, and in a future network an AP might have multiple specific forms and support various kinds of possible modes. A local service center equals to a UE-centred local control plane, providing services such as radio resource management, access control, QoS control and mobility management.

Preferred, an AP processes the uplink signal in any one or a combination of radio frequency, physical layer, media access control layer, and radio link control (RLC) layer to obtain the first report information.

Where the UE-centred network further arranged with a network service center, equivalent to a UE-centred network control plane, configured to manage service strategy of UE.

In the UE-centred network, an AP could be considered as an intermediate node to establish mobile communications between UEs, a UE and a local service center, and a UE and an external network.

A local service center could be considered as an intermediate node to establish mobile communications between a UE and a network service center, a UE and an external network, and between UEs.

Open internet protocol (IP) interfaces could be used among an AP, a local service center and a network service center to forward service information and data.

According to a first embodiment of the present application, as illustrated in Fig.4, detailed flow of a method for any one AP in the UE-centred network to realize mobile communication is described below.

Operation 401: An AP monitors an uplink signal sent by a UE adjacent thereto.

Operation 402: The AP obtains first reporting information according to the uplink signal.

Operation 403: The AP sends the first reporting information to a local service centre serving the AP for processing.

Where the first reporting information at least includes an identifier of the UE, an identifier of the AP and related information of communication service.

Where the uplink signal sent by the UE includes but is not limited to any one or a combination of a registration request signal, an uplink detection signal and a data transmission request signal. Various uplink signals of the UE which request services could be sent by the AP to network side for processing, the processing of which is similar with the processing of the registration request signal, uplink detection signal and data request signal.

Where if the AP is able to process the monitored uplink signal directly, the AP processes the uplink signal to generate the first reporting information, and if the AP is unable to process the monitored uplink signal, the AP reports the first reporting information carrying the uplink signal to the local service center serving the AP.

Preferred, the AP processes the uplink signal in any one or a combination of radio frequency, physical layer, media access control layer, and radio link control (RLC) layer to obtain the first report information.

Preferred, the detailed process of registration of the UE on the network side is as follows.

The UE sends a registration request signal;
at least one AP adjacent to the UE measures the registration request signal of the UE to obtain a measuring result, and generates the first reporting information according to this measuring result and the registration request signal; or, generates the first reporting information according to this measuring result, a measuring result obtained by previously measuring the uplink signal of the UE and the registration request signal;
the at least one AP reports the first reporting information to the local service center serving the AP, so that the local service center analyzes the registration request signal to obtain registration information of the UE, allocates transmission resources for the UE, and sends the registration information of the UE and an identifier of the local service centre to the network service center, or, the local service center sends the first reporting information and the identifier of the local service center to the network service center, so that the network service center analyzes the first reporting information to obtain the registration information of the UE.

In a specific implementation, the UE transmits an uplink signal before transmitting the registration request signal, the AP adjacent to the UE measures the uplink signal, generates the first reporting information according to the measuring result, and transmits the first reporting information to the local service center serving the AP, so that the local service center configures resources for the UE, and informs the UE of the configured resources via the AP.

In another specific implementation, the uplink signal sent by the UE for the first time is a registration request signal, the AP measures the registration request signal to obtain a measuring result, where the measuring result includes the identifier of the UE, and transmits the measuring result and the registration request signal to the local service center for processing.

Where after the AP obtains a measuring result by measuring the registration request signal of the UE, the AP compares the measuring result and a preset condition, and generates and reports the first reporting information to the local service center serving the AP when determining that the preset condition is satisfied, where the first reporting information at least includes the registration request signal.

In a specific application, the first reporting information further includes quality information of a link between the UE and the AP and relative location information of the UE and the AP.

Where the local service center saves the configuration information of the UE locally after receiving the first reporting information, where the configuration information includes the quality information of the link between the UE and the AP and the relative location information of the UE and the AP. Specifically, the configuration information further includes the identifier of at least one AP which reported the first reporting information corresponding to the UE.

Preferred, during the registration on the network side, if a plurality of APs measure a registration request signal of the same UE, and determine that the measured registration request signal is valid according to the measuring result, then each of these APs generates first reporting information and sends the first reporting information to a local service center serving the AP.

Preferred, a local service center could appoint the function of each or a part of multiple APs corresponding to the UE. Specifically, an AP receives from the local service center an instruction of performing data transmission service for the UE and/or an instruction of performing mobility measurement service for the UE.

In a specific implementation, UE only needs to register once on the network side. If the attribute information of the UE changes, the registration information of the UE is updated according to the latest attribute information reported by the UE.

In the implementation above, after the UE registers on the network side, when the UE is booted up or when its location changes, the UE needs to send an uplink detection signal to the network side to inform the network side of current physical location information of the UE.

Preferred, the UE transmits an uplink detection signal, where the uplink detection signal is configured to determine the current location information of the UE. In a specific implementation, the UE transmits an uplink detection signal every set time interval or the UE transmits an uplink signal when a triggering condition is satisfied.

Where the rules of sending by the UE an uplink detection signal could be preset, or agreed by the UE and an adjacent AP, or the AP informs the UE of the rules in a fixed way, e.g., the AP broadcast to the UE in a specific frequency.

Corresponding to the implementation above, the AP adjacent to the UE measures the uplink detection signal of the UE to obtain a measuring result, generate first reporting information according to the measuring result, and transmits the first reporting information to a local service center serving the AP. Specifically, the first reporting information at least includes the identifier of the UE and further includes current location information of the UE and/or the identifier of the AP which reports the first reporting information. Specifically, the first reporting information may further includes measured quality information of a link between the UE and the AP and relative location information of the UE and the AP.

The local service center updates the configuration information of the UE which is locally saved, or, creates the configuration information of the UE locally, according to the current location information of the UE and/or the identifier of the AP, carried in the first reporting information. So that the local service center could address the UE according to the current location information of the UE and/or the identifier of the AP. In a preferred implementation, the location information of the UE is the location information of the current AP which has received the uplink detection signal.

Preferred, if the uplink signal sent by UE is a data transmission request, and the data transmission request carries configuration information requested for protecting data transmission, an AP adjacent to the UE determines the monitored data transmission request as first reporting information and sends the first reporting information to a local service center serving the AP, so that the local service center configures air interface resources for data transmission for the UE or instruct the AP to configure air interface resources for data transmission, according to the first reporting information, and the local service center transmits the data transmission request to the network service center, so that the network service center configures data transmission resources for the UE according to the data transmission request.

The AP measures any of the uplink signals of the UE, after determining that the measuring result satisfies a preset condition, that is, determining that the uplink signal is a valid signal, the AP generates the first reporting signal and report it. The preset condition could be set corresponding to any one or more measured items in a measuring result, such as quality information of a link between the UE and the AP, or reception strength information of an uplink signal etc.. In a specific implementation, there may be various kinds of preset conditions and measuring results, as long as it is able to judge whether a measured signal is a valid signal or not, and the present application is not limited thereto.

In this embodiment, after a UE is booted up, it is connected to the network all the time. In any situations when a UE is connected to the network, an AP needs to keep a logical connection between the UE and a local service center, that is, the UE might periodically or be triggered to transmit an uplink signal to report its current location information or communication requirements, so that the local service center could obtain the latest location information or communication requirements of the UE so as to provide services for the UE in time.

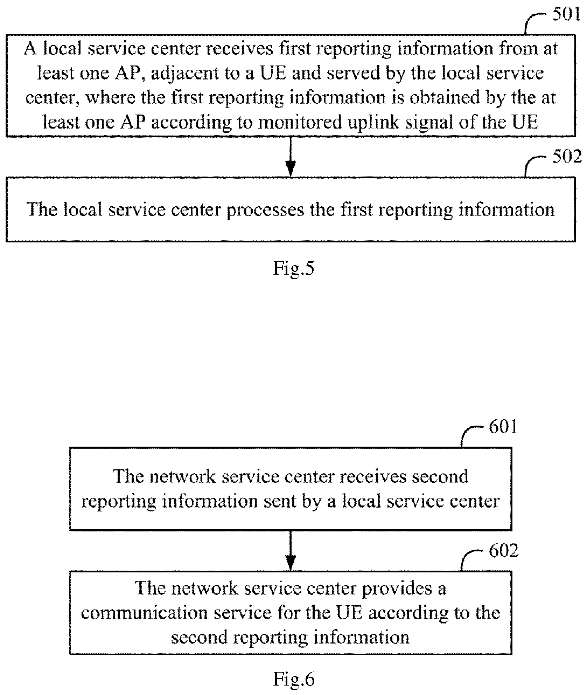

According to a second embodiment of the present application, as illustrated in Fig.5, a detailed flow of the method for any one local service center in the UE-centred network to realize mobile communication is as follows.

Operation 501: a local service center receives first reporting information from at least one AP adjacent to a UE and served by the local service center, where the first reporting information is obtained by the at least one AP according to monitored uplink signal of the UE.

Operation 502: the local service center processes the first reporting information.

The local service center schedules communication resources of the UE according to the first reporting information to provide good service for the UE.

For example, the local service center organizes communication resources for the UE according to the first reporting information and set up a communication link between the UE and other network device or terminal device.

In this embodiment, depending on differences between communication services requested by the uplink signal, the local service center could use various different ways to deal with the first reporting information. For example, the local service center processes the first reporting information and saves the processing result locally, or the local service center returns the processing result to the AP, or, the local service center returns the processing result to the AP and the AP notifies the UE, or the local service center transmits the processing result to other local service centers, or the local service center transmits the processing result to the network service center, and so on, which are just an enumeration, and the present application is not limited thereto.

Preferred, the local service center generates second reporting information according to the first reporting information, and sends the second reporting information to the network service center, so that the network service center provides communication services for the UE according to the second reporting information.

Preferred, during registration of the UE on the network side, the first reporting information is generated by at least one AP according to a measuring result obtained by measuring registration request signal of the UE and the registration request signal, or generated by at least one AP according to a measuring result obtained by measuring registration request signal of the UE, another measuring result obtained by measuring the UE's uplink signal prior to the registration request signal and the registration request signal.

The local service center receives the first reporting information reported by the at least one AP, analyzes the registration request signal and obtains registration information of the UE and transmits the registration information of the UE, the identifier of the local service center and the identifier of the UE to the network service center;
or,
the local service center transmits the first reporting information and its own identifier to the network service center, so that the network service center analyzes the first reporting information to obtain the registration information of the UE, the identifier of the UE and the identifier of the local service center.

In this preferred implementation, the first reporting information at least includes the registration request signal.

More preferred, the first reporting information further includes the identifier of the UE and the identifier of the AP, the local service center creates configuration information of the UE locally and saves corresponding relationship between the identifier of the UE and the identifier of the AP into the configuration information.

More preferred, the first reporting information further includes quality information of a link between the UE and the AP and relative location information of the UE and the AP, and the local service center saves quality information of the link between the UE and the AP and the relative location information of the UE and the AP into the locally created configuration information of the UE.

Preferred, the first reporting information is generated by at least one AP according to a measuring result obtained by measuring uplink detection signal of the UE, where the first reporting information at least includes the identifier of the UE and theidentifier of the AP;
the local service center determines that configuration information of the UE is locally stored, compares an AP set included in the configuration information of the UE and an AP set consisting of the at least one AP, and updates the AP set of the UE in the configuration information to be the AP set consisting of the at least one AP which currently reports the first reporting information of the UE when determining that a preset update condition is satisfied;
or,
determining, by the local service center, that onfiguration information of the UE is not locally stored, configures transmission resources for the UE according to the first reporting information, and saves the transmission resources and a set consisting of the at least one AP, which reported the first reporting information, as the configuration information of the UE.

More preferred, the local service center compares an AP set included in the configuration information of the UE and an AP set consisting of the at least one AP, and re-determines and configures transmission resources of the UE according to the AP set consisting of the at least one AP, which reported the first reporting information, when determining that a preset update condition is satisfied.

In a specific implementation, the configuration information saved in the local service center includes the identifier of each AP of the AP set, and further includes quality information of a link between the UE and the each AP and/or load information of the each AP. The first reporting information further includes a transmission requirement of the UE.

In this implementation, the local service center determines that the update condition of the AP set in the configuration information of the UE is satisfied, may include various situations.

For an existing AP in the AP set in the configuration information of the UE, if the quality of the link between the AP and the UE is lower than a preset threshold, the AP is deleted from the AP set; or,
for an AP outside the AP set in the configuration information of the UE, if the quality of the link between the AP and the UE is higher than a preset threshold, the AP is added into the AP set in the configuration information of the UE; or.
if the UE's transmission requirement is lower than a preset threshold, any AP whose link quality is lower than a preset threshold in the AP set in the configuration information of the UE is removed; or
if the UE's transmission requirement is higher than a preset threshold, and if the quality of the link between an AP outside the AP set in the configuration information of the UE and the UE is higher than a preset threshold, the AP is added into the AP set in the configuration information; or
for an AP outside the AP set in the configuration information of the UE, if the AP's load is determined to be lower than a preset threshold according to the AP's load information, the AP is added into the AP set in the configuration information of the UE; or
for an existing AP in the AP set in the configuration information of the UE, if the AP's load is determined to be higher than a preset threshold according to the AP's load information, the AP is deleted from the AP set.

The described situations above are just an enumeration, and embodiments of the present application are not limited thereto.

Preferred, after the local service center obtains a set consisting of at least one AP corresponding to the UE, the local service center could send to a part of APs among the at least one AP an instruction of performing a data transmission service for the UE and/or an instruction of performing a mobility measurement service for the UE.

Preferred, the first reporting information is generated by at least one AP according to a measuring result obtained by measuring uplink detection signal of the UE, where the first reporting information at least includes the identifier of the UE and current location information of the UE;
the local service center determines that configuration information of the UE is locally saved, compares the location information of the UE in the configuration information of the UE with the current location information of the UE, updates the location information of the UE in the configuration information to be the current location information of the UE when determining that a location information update condition is satisfied, and re-determines and configures transmission resources of the UE;
or,
the local service center determines that configuration information of the UE is not locally saved, configures transmission resources for the UE according to the first reporting information and saves the transmission resources and the current location information of the UE as the configuration information.

Preferred, the local service center determines that the configuration information of the UE is not locally saved, sends its own identifier to the network service center, so that the network service center modifies a locally saved identifier of the local service center corresponding to the UE on the basis of the identifier of the local service center, so that the network service center could downlink address the local service center and the local service center downlink address at least one AP adjacent to the UE according to the saved configuration information of the UE.

In a specific implementation, the current location information of the UE is the location information of current AP which receives the uplink detection signal.

Preferred, when the UE has data to transmit, the first reporting information is a data transmission request of the UE received by the at least one AP, where the data transmission request carries configuration information requested for protecting data transmission.

The local service center configures air interface resources for data transmission for the UE according to the data transmission request, or instruct the at least one AP to configure air interface resources for data transmission, such as an operating frequency, and sends the data transmission request to the network service center, so that the network service center configures data transmission resources for the UE according to the data transmission request.

In this embodiment, the transmission resources for the UE configured by the local service center are mainly air interface resources occupied by the UE, the local service center configures transmission resources for the UE and notifies at least one AP adjacent to the UE and the at least one AP notifies the UE.

In this embodiment, no matter whether the UE has data to transmit or not, the UE might periodically or be triggered to report its current location information, the local service center updates locally saved current location information of the UE in time and ensures that the configuration information of the UE is updated in time when the configuration information of the UE changes, so as to ensure the validity of the configuration information of the UE and make the uplink and downlink communication of UE be performed successfully.

For example, if the AP which provides a transmission channel for the UE has been changed, and the new AP doesn't support the current operating frequency, then the local service center needs to re-configure the operating frequency for the UE.

In this embodiment, if the AP which provides a service for the UE has been changed, but the new AP and the old AP are served by a same local service center, then the local service center updates the AP set, corresponding to the UE, in the local configuration information; if the AP which provides a service for the UE has been changed, but the new AP and the old AP are not served by a same local service center, then the local service center needs to create and save configuration information of the UE and sends the identifier of the local service center to the network service center, so that the network service center could address the local service center which currently provides the service for the UE when the network service center is downlink addressing the UE.

Preferred, for any uplink signal transmitted by the UE, the first reporting information includes the quality information of a link between the UE and an AP and relative location information of the UE and the AP.

According to a third embodiment of the present application, as illustrated in Fig.6, detailed flow of a method for the network service center in the UE-centred network to realize mobile communication is as follows.

Operation 601: the network service center receives second reporting information sent by a local service center, where the second reporting information is obtained by the local service center by processing first reporting information transmitted by at least one AP adjacent to a UE, and the first reporting information is obtained by the at least one AP according to an uplink signal of the UE.

Operation 602: the network service center provides a communication service for the UE according to the second reporting information.

The communication service provided by the network service center for the UE includes but is not limited to a network control service such as registration, subscription, authentication or strategy management.

In a preferred implementation, the second reporting information includes registration information of the UE, where the registration information at least includes an identifier of the UE and attribute information of the UE.

The network service center looks for registration information on the network side according to the identifier of the UE, determines that the UE has never been registered, and registers the UE on the network side according to the registration information.

In another preferred implementation, the second reporting information includes registration request signal of the UE and an identifier of the UE, the network service center looks for registration information on the network side according to the identifier of the UE, determines that the UE has never been registered, analyzes the registration request signal of the UE to obtain registration information of the UE, and registers the UE on the network side according to the registration information.

Preferred, the second reporting information further includes the identifier of the UE and an identifier of the local service center.

The network service center uses the identifier of the local service center carried in the second reporting information to update a local service center's identifier corresponding to the UE's identifier saved on the network side.

Preferred, the second reporting information includes data transmission request of the UE.

The network service center configures resources for the UE according to the data transmission request, where the configured resources includes transmission attributes of data, a dedicated transmission channel, and a mapping relationship between a data packet's type and a transmission channel.

The transmission attributes of data includes a QoS requirement, a time delay, block error rate, priority, a transmission rate attribute and so on.

The data transmission request of the UE could also include resources requested by the UE, the network service center determines whether or not it is able to provide the resources requested by the UE for the UE according to the situation of network resources usage. If it is able to provide the resources, the network service center configures resources according to the resources requested by the UE, and if it is unable to provide the resources, the network service center negotiates with the UE to determine the resources to be configured.

In this embodiment, after the network service center configures resources for the UE, the network service center notifies the local service center corresponding to the UE of the information of the configured resources, and the local service center notifies at least one AP corresponding to the UE of the information of the configured resources, so that the at least one AP would notify the UE.

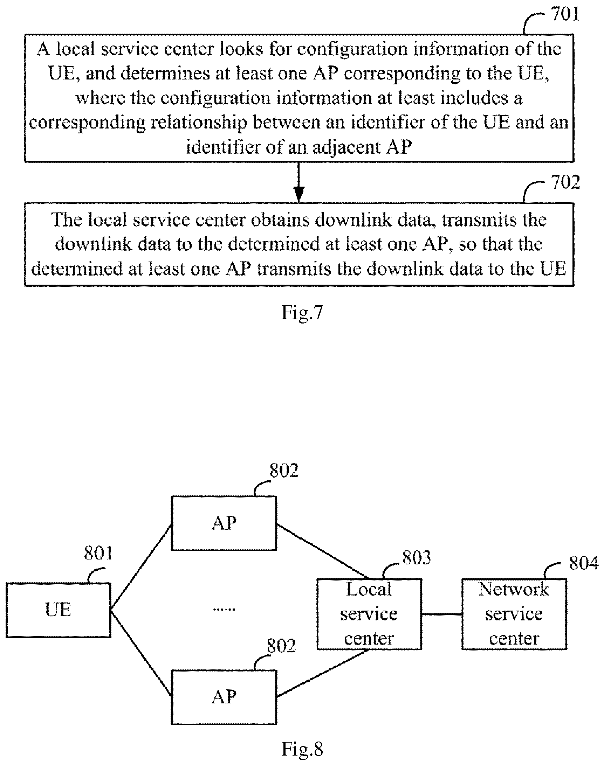

According to a fourth embodiment of the present application, as illustrated in Fig.7, the detailed flow of a method for performing downlink data transmission in the UE-centred network is as follows.

Operation 701: a local service center looks for configuration information of the UE, and determines at least one AP corresponding to the UE, where the configuration information at least includes a corresponding relationship between an identifier the UE and an identifier of an adjacent AP.

Operation 702: the local service center obtains downlink data, transmits the downlink data to the determined at least one AP so that the determined at least one AP transmits the downlink data to the UE.

Preferred, the downlink data is transmitted according to a determined identifier of the local service center by the network service center, after the network service center determines the identifier of the local service center corresponding to the UE according to a corresponding relationship between the identifier the UE and the identifier the local service center.

Based on the same inventive conception, according to a fifth embodiment of the present application, a mobile communication system is provided, where for specific implementation of each network node in the system please refer to descriptions of the first embodiment to the third embodiment above, which will not be repeated here anymore. As illustrated in Fig.8, the system mainly includes:
UE 801, configured to transmit an uplink signal;
at least one AP 802, configured to monitor the uplink signal transmitted by the UE 801 adjacent thereto, obtain first reporting information according to the uplink signal and transmit the first reporting information to a local service center serving the at least one AP 802 for processing; and
a local service center 803, configure to process the first reporting information.

Preferred, the system further includes a network service center 804, configured to: receive second reporting information generated by the local service center according to the first reporting information and provides a communication service for the UE according to the second reporting information.

Preferred, when the UE is registered on the network side, the UE is specifically configured to transmit a registration request signal;
the at least one AP is specifically configured to measure the registration request signal of the UE, and generate the first reporting information according to a measuring result obtained by this measuring and the registration request signal, or generate the first reporting information according to this the measuring result obtained by this measuring, a measuring result obtained by previously measuring the uplink signal of the UE and the registration request signal.
the local service center is specifically configured to analyze the registration request signal to obtain registration information of the UE, and send the registration information of the UE, its own identifier, and an identifier the UE to a network service center, or, send the first reporting information to the network service center, or, send the first reporting information and the identifier of the local service center to the network service center;
the network service center is specifically configured to: register the UE on network side according to the registration information, wherein the registration information at least includes the identifier of the UE and attribute information of the UE, and store a corresponding relationship between the identifier of the UE and the identifier of the local service center; or analyze the first reporting information to obtain the registration information and the identifier of the UE, register the UE on the network side according to the registration information, wherein the registration information at least includes the identifier of the UE and the attribute information of the UE, and store a corresponding relationship between the identifier of the UE and the identifier of the local service center.

Preferred, the UE periodically or is triggered to transmit an uplink detection signal, where the uplink detection signal is configured for the network side to determine the UE's current location information or the UE's network situation.

Preferred, the user equipment is specifically configured to: send an uplink detection signal;
the at least one AP is specifically configured to: measure the uplink detection signal of the UE to obtain a measuring result, generate the first reporting information according to the measuring result, wherein the first reporting information at least includes the identifier of the UE and the identifier of the AP, and send the first reporting information to the local service center serving the AP;
the local service center is specifically configured to: determine that configuration information of the UE is stored locally, compare an AP set included in the configuration information of the UE and an AP set consisting of the at least one AP, and when it is determined that a preset update condition is satisfied, update the AP set of the UE in the configuration information to be the AP set consisting of the at least one AP; or, determine that configuration information of the UE is not locally stored, configure transmission resources for the UE according to the first reporting information and store the transmission resources and a set consisting of the at least one AP as the configuration information of the UE;
where the local service center is further configured to: after determining that the preset update condition is satisfied, re-determine and configure transmission resources of the UE according to the AP set consisting of the at least one AP.

Preferred, the user equipment is specifically configure to: send an uplink detection signal;
the at least one AP is specifically configured to: measure the uplink detection signal of the UE to obtain a measuring result, generate the first reporting information according to the measuring result, wherein the first reporting information at least includes the identifier of the UE and current location information of the UE, and send the first reporting information to the local service center serving the AP;
the local service center is specifically configured to: determine that configuration information of the UE is locally stored, compare the location information of the UE in the configuration information of the UE and the current location information of the UE, and when it is determined that a location information update condition is satisfied, update the location information of the UE in the configuration information to be the current location information of the UE, and re-determine and configure transmission resources of the UE; or, determine that configuration information of the UE is not stored locally, configure transmission resources for the UE according to the first reporting information, and store the transmission resources and the current location information of the UE as the configuration information.

Preferred, the local service center is further configured to: after determining that the configuration information of the UE is not stored locally, send the identifier of the local service center to the network service center;
the network service center is specifically configured to: modify a locally stored identifier of the local service center corresponding to the UE according to the identifier of the local service center.

Preferred, the UE is specifically configured to: send a data transmission request, wherein the data transmission request carries configuration information requested for protecting data transmission;
the at least one AP is specifically configured to: monitor the data transmission request, and determine the data transmission request as the first reporting information and send the first reporting information to the local service center;
the local service center is specifically configured to: configure air interface resources for data transmission according to the data transmission request or instruct the at least one AP to configure air interface resources for data transmission, and send the data transmission request to the network service center;
the network service center is specifically configured to: configure data transmission recourses for the UE according to the data transmission request.

Preferred, the local service center is further configured to: send to a part of APs among the at least one AP an instruction of performing a data transmission service for the UE and/or an instruction of performing a mobility measurement service.

Based on the same inventive conception, a sixth embodiment of the present application provides a mobile communication system, where for specific implementation of each work node in the system please refer to descriptions of the first embodiment to the fifth embodiment above, which will not be repeated here anymore. The system mainly includes:
a local service center, configured to look for configuration information of user equipment (UE), determine at least one AP corresponding to the UE, wherein the configuration information at least includes a corresponding relationship between an identifier the UE and an identifier of an adjacent AP, obtain downlink data and send the downlink data to the determined at least one AP;
the at least one AP, configured to send the downlink data to the UE; and
the UE, configured to receive the downlink data sent by the at least one AP.

Preferred, the system further includes a network service center, configured to: determine an identifier of local service center corresponding to the UE according to a corresponding relationship between an identifier of the UE and an identifier of the local service center, and then send the downlink data to the corresponding local service center according to the determined identifier of local service center..

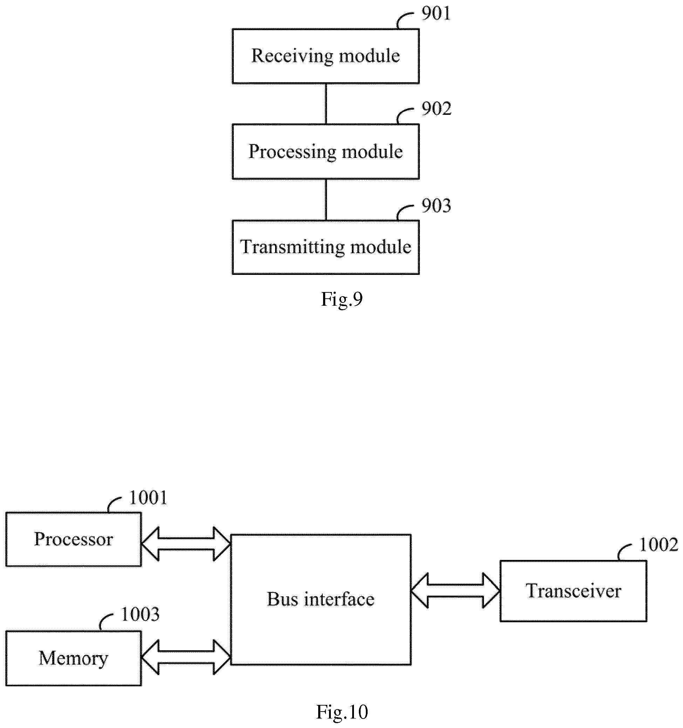

Based on the same inventive conception, a seventh embodiment of the present application provides an access point device, where for specific implementation of the device please refer to descriptions of AP in the first embodiment to the fourth embodiment above, which will not be repeated here anymore. As illustrated in Fig.9, the device mainly includes:
a receiving module 901, configured to monitor an uplink signal sent by adjacent user equipment (UE);
a processing module 902, configured to obtain first reporting information according to the uplink signal; and
a transmitting module 903, configured to transmit the first reporting information to a local service center serving the access point device for processing.

Preferred, the processing module is specifically configured to: process the uplink signal in any one or a combination of radio frequency, physical layer, media access control layer, and radio link control (RLC) layer to obtain the first report information.

Preferred, the uplink signal is a registration request signal of the UE;
the receiving module is specifically configured to: measure the registration request signal of the UE to obtain a measuring result;
the processing module is specifically configured to: generate the first reporting information according to a measuring result obtained by this measuring and the registration request signal, or, generate the first reporting information according to the measuring result obtained by this measuring, a measuring result obtained by previously measuring the uplink signal of the UE and the registration request signal.

Preferred, the uplink signal is an uplink detection signal of the UE;
the receiving module is specifically configured to: obtain a measuring result by measuring the uplink detection signal of the UE;
the processing module is specifically configured to: generate the first reporting information according to the measuring result, wherein the first reporting information at least includes an identifier of the UE and includes current location information of the UE and/or the AP's own identifier.

Preferred, the uplink signal is a data transmission request, and the data transmission request carries configuration information requested for protecting data transmission;
the processing module is specifically configured to: determine the data transmission request as the first reporting information.

Preferred, the receiving module is further configured to: receive an instruction sent by the local service center of performing a data transmission service for the UE and/or an instruction sent by the local service center of performing a mobility measurement service for the UE.

Based on the same inventive conception, an eighth embodiment of the present application provides an access point device, where for specific implementation of the device please refer to descriptions of AP in the first embodiment to the fourth embodiment above, which will not be repeated here anymore. As illustrated in Fig. 10, the device mainly includes a processor 1001, a transceiver 1002 and a memory 1003, where the process 1001 is configured to read programs in the memory 1003 to perform the following operations:
instructing the transceiver 1002 to monitor an uplink signal sent by user equipment (UE) adjacent thereto;
obtaining first reporting information according to the uplink signal; and
instructing the transceiver 1002 to send the first reporting information to a local service center serving the AP for processing.

Preferred, the processor 1001 processes the uplink signal in any one or a combination of radio frequency, physical layer, media access control layer, and radio link control (RLC) layer to obtain the first report information.

Preferred, the uplink signal is a registration request signal of the UE;
the transceiver 1002 measures the registration request signal of the UE to obtain a measuring result;
the processor 1001 generates the first reporting information according to the measuring result obtained by this measuring and the registration request signal, or generates the first reporting information according to this the measuring result obtained by this measuring, a measuring result obtained by previously measuring the uplink signal of the UE and the registration request signal.

Preferred, the uplink signal is an uplink detection signal of the UE;
the transceiver 1002 measures the uplink detection signal of the UE to obtain a measuring result; and
the processor 1001 generates the first reporting information according to the measuring result, where the first reporting signal at least includes an identifier of the UE and includes current location information of the UE and/or an identifier of the AP.

Preferred, the uplink signal is a data transmission request, where the data transmission request carries configuration information requested for protecting data transmission; and
the processor 1001 determines the data transmission request as the first reporting signal.

Preferred, the transceiver 1002 receives an instruction sent by the local service center of performing a data transmission service for the UE and/or an instruction sent by the local service center of performing a mobility measurement service for the UE.

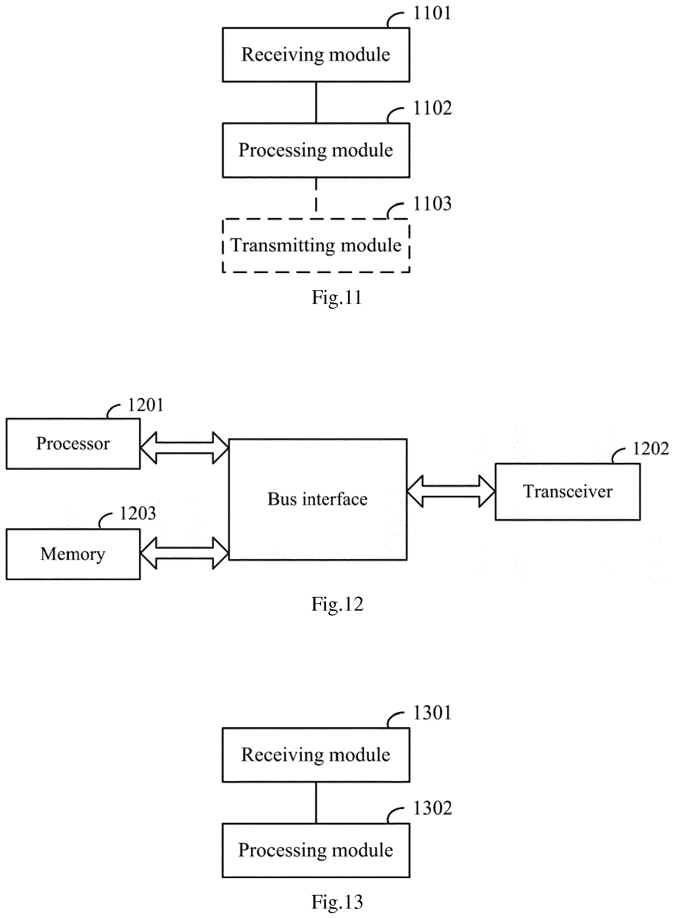

Based on the same inventive conception, according to a ninth embodiment of the present application, a network device is provided, where for specific implementation of the device in the system please refer to descriptions of a local service center in the first embodiment to the fourth embodiment above, which will not be repeated here anymore. As illustrated in Fig.11, the device mainly includes:
a receiving module 1101, configured to receive first reporting information sent from at least one AP adjacent to a user equipment (UE) and served by the network device, where the first reporting information is obtained by the at least one AP according to an monitored uplink signal of the UE; and
a processing module 1102, configured to process the first reporting information.

Preferred, the processing module 1102 is specifically configured to: generate second reporting information according to the first reporting information;
the device further includes a transmitting module 1103, configured to: transmit the second reporting information to a network service center, so that the network service center provides a communication service for the UE according to the second reporting information.

Preferred, the first reporting information is generated by the at least one AP according to a measuring result obtained by measuring an registration request signal of the UE and the registration request signal, or, generated by the at least one AP according to a measuring result obtained by measuring the registration signal of the UE, a measuring result obtained by measuring the uplink signal of the UE prior to the registration request signal and the registration request signal;
the processing module is specifically configured to: analyze the registration request signal to obtain registration information of the UE, determine the registration information of the UE, the identifier of the network device and the identifier of the UE as the second reporting information; or, the processing module is specifically configured to: determine the first reporting information and the the identifier of the network device as the second reporting information.

Preferred, where the first reporting information is generated by the at least one AP according to a measuring result obtained by measuring the uplink detection signal of the UE, where the first reporting information at least includes the identifier of the UE and the identifier of the AP;
the processing module is specifically configured to: determine that configuration information of the UE is locally stored, compare an AP set included in the configuration information of the UE and an AP set consisting of the at least one AP, and update the AP set of the UE in the configuration information to be the AP set consisting of the at least one AP when determining that a preset update condition is satisfied; or, determine that configuration information of the UE is not locally stored, configure transmission resources for the UE according to the first reporting information and stores the transmission resources and a set consisting of the at least one AP as the configuration information of the UE.

Preferred, the processing module is further configured to: re-determine and configure transmission resources of the UE according to the AP set consisting of the at least one AP.

Preferred, the first reporting information is generated by the at least one AP according to a measuring result obtained by measuring the uplink detection signal of the UE, and the first reporting information at least includes an identifier of the UE and current location information of the UE; the processing module is specifically configured to: determine that configuration information of the UE is locally stored, compare the location information of the UE in the configuration information of the UE and the received current location information of the UE, if it is determined that a location information update condition is satisfied, update the location information of the UE in the configuration information to be the current location information of the UE, re-determine and configure transmission resources of the UE; or, determine that configuration information of the UE is not locally stored, configure transmission resources for the UE according to the first reporting information, save the transmission resources and the current location information of the UE as the configuration information.

Preferred, the processing module is further configured to: after determining that the configuration information of the UE is not locally stored, instruct the transmitting module to transmit the device's own identifier to a network service center, so that the network service center modifies a locally stored identifier of the local service center corresponding to the UE according to the identifier of the local service center.

Preferred, the first reporting information is a data transmission request of the UE received by the at least one AP, and the data transmission request carries configuration information requested for protecting data transmission; the processing module is specifically configured to: configure air interface resources for data transmission for the UE or instruct the at least one AP to configure air interface resources for data transmission, according to the data transmission request, and determine the data transmission request as the second reporting information.

Preferred, the transmitting module transmits to a part of APs among the at least one AP an instruction of performing a data transmission service for the UE and/or an instruction of performing a mobility measurement service for the UE.

Based on the same inventive conception, according to a tenth embodiment of the present application, a network device is provided, where for specific implementation of the device please refer to descriptions of a local service center in the first embodiment to the fourth embodiment above, which will not be repeated here anymore. As illustrated in Fig.12, the device mainly includes: a processor 1201, a transceiver 1202 and a memory 1203, where the processor 1201 is configured to read programs in the memory 1203 to perform the following operations:
instructing the transceiver 1202 to receive first reporting information sent by at least one AP served by the local service center and adjacent to a vuser equipment (UE), where the first reporting information is obtained by the at least one AP according to an monitored uplink signal of the UE; and
processing the first reporting information.

Preferred, the processor 1201 generates second reporting information according to the first reporting information; and
instructs the transceiver 1202 to send the second reporting information to a network service center, so that the network service center provides a communication service for the UE according to the second reporting information.

Preferred, the first reporting information is generated by the at least one AP according to a measuring result obtained by measuring a registration request signal of the UE and the registration request signal, or, generated by the at least one AP according to the measuring result obtained by measuring a registration request signal of the UE, a measuring result obtained by measuring an uplink signal of the UE before the registration request signal and the registration request signal;
the processor 1201 analyzes the registration request signal to obtain registration information of the UE, and determines the registration information, the identifier of the local service center and the identifier the UE as the second reporting information; or, the processor determines the first reporting information and the identifier of the network device as the second reporting information.

Preferred, the first reporting information is generated by the at least one AP according to a measuring result obtained by measuring an uplink detection signal of the UE, where the first reporting information at least includes the identifier of the UE and the identifier of the AP;
the processor 1201 determines that configuration information of the UE is locally stored, compares an AP set included in the configuration information of the UE and an AP set consisting of the at least one AP, and updates the AP set of the UE in the configuration information to be the AP set consisting of the at least one AP when determining that a preset upset condition is satisfied; or, the processor determines that configuration information of the UE is not stored locally, configures transmission resources for the UE according to the first reporting information and saves the transmission resources and a set consisting of the at least one AP as the configuration information of the UE.

Preferred, the processor 1201 re-determines and configures transmission resources of the UE according to the AP set consisting of the at least one AP.

Preferred, the first reporting information is generated by the at least one AP according to a measuring result obtained by measuring an uplink detection signal of the UE, where the first reporting information at least includes an identifier of the UE and current location information of the UE;
the processor 1201 determines that current location information of the UE is locally stored, compares the location information of the UE in the configuration information of the UE and the received current location information of the UE, and updates the location information of the UE in the configuration information to be the current location information of the UE when determining that a location information upset condition is satisfied, re-determines and configures the UE's transmission resources; or, the processor determines that configuration information of the UE is not stored locally, configures transmission resources for the UE according to the first reporting information and saves the transmission resources and the current location information of the UE as the configuration information.

Preferred, after the processor 1201 determines that the configuration information of the UE is not locally saved, the processor 1201 instructs the transceiver to send the device's own identifier to a network service center, so that the network service center modifies a locally stored identifier of the local service center corresponding to the UE according to the identifier of the local service center.

Preferred, the first reporting information is a data transmission request of the UE received by the at least one AP, where the data transmission request carries configuration information requested for protecting data transmission; the processor configures air interface resources for data transmission for the UE according to the data transmission request or instructs the at least one AP to configure air interface resources for data transmission and determines the data transmission request as the second reporting information.

Preferred, the transceiver 1202 sends to a part of APs among the at least one AP an instruction of performing data a transmission service for the UE and/or an instruction of performing a mobility measurement service for the UE.

Based on the same inventive conception, according to an eleventh embodiment of the present application, a network device is provided, where for specific implementation of the device please refer to descriptions of the network service center in the first embodiment to the fourth embodiment above, which will not be repeated here anymore. As illustrated in Fig. 13, the device mainly includes:
a receiving module 1301, configured to receive second reporting information from a local service center, where the second reporting information is obtained by the local service center by processing first reporting information sent by at least one AP adjacent to a user equipment (UE), and the first reporting information is obtained by the at least one AP according to an uplink signal of the UE; and
a processing module 1302 , configured to provide a communication service for the UE according to the second reporting information.

Preferred, the second reporting information includes registration information of the UE and the registration information at least includes an identifier of the UE and attribute information of the UE; the processing module is specifically configured to: look for registration information on network side according to the identifier of the UE, determine that the UE has never been registered and register the UE on the network side according to the registration information;
or,
the second reporting information includes registration request signal of the UE and the an identifier of the UE; the processing module is specifically configured to: look for registration information on network side according to the identifier the UE, determine that the UE has never been registered, analyze the registration request signal of the UE to obtain the registration information of the UE, and register the UE on the network side according to the registration information.

Preferred, the second reporting information includes an identifier of the local service center; the processing module is specifically configured to:
update an identifier of the local service center, corresponding to the UE, stored on the network side according to the identifier the local service center carried in the second reporting information.

Preferred, the second reporting information includes a data transmission request of the UE; the processing module is specifically configured to:
configure resources for the UE according to the data transmission request, where the configured resources include transmission attributes of data, a dedicated transmission channel and a mapping relationship between a packet type and a transmission channel.

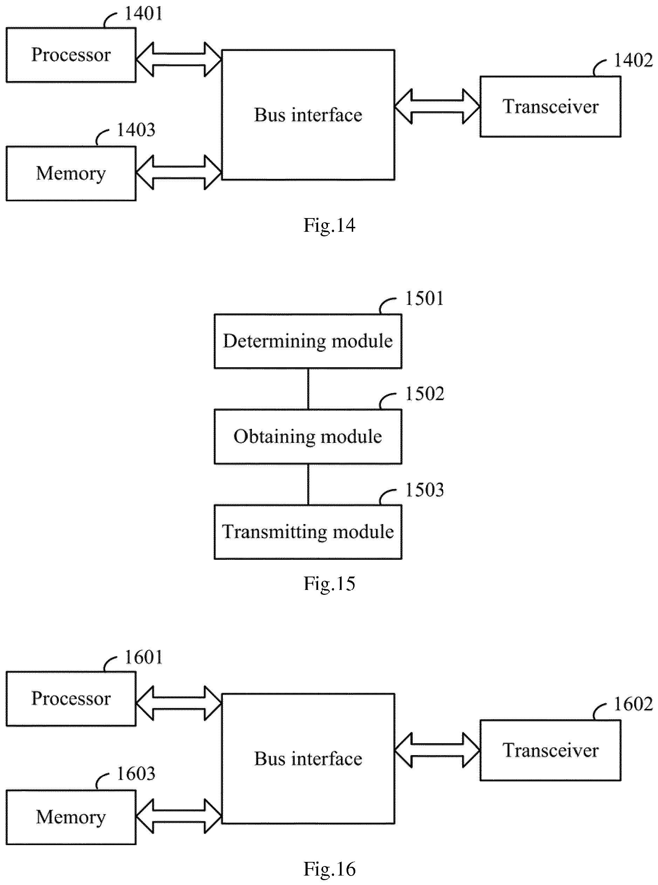

Based on the same inventive conception, according to a twelfth embodiment of the present application, a network device is provided, where for specific implementation of the device in the system please refer to descriptions of the network service center in the first embodiment to the fourth embodiment above, which will not be repeated here anymore. As illustrated in Fig. 14, the device mainly includes a processor 1401, a transceiver 1402 and a memory 1403, where the processor 1401 is configured to read programs in the memory 1403 to perform the following operations:
instructing the transceiver 1402 to receive second reporting information from a local service center, where the second reporting information is obtained by the local service center by processing first reporting information sent by at least one AP adjacent to a user equipment (UE), and the first reporting information is obtained by the at least one AP according to an uplink signal of the UE; and
providing a communication service for the UE according to the second reporting information.

Preferred, the second reporting information includes registration information of the UE, and the registration information at least includes an identifier of the UE and attribute information of the UE, the processor 1401 looks for registration information on network side according to the identifier of the UE, determines that the UE has never been registered, and registers the UE on the network side according to the registration information,
or,
the second reporting information includes a registration request signal and an identifier of the UE, and the processor 1401 looks for registration information on network side according to the identifier of the UE, determines that the UE has never been registered, analyzes the registration request signal of the UE to obtain registration information of the UE and registers the UE on the network side according to the registration information.

Preferred, the second reporting information includes an identifier of the local service center;
the processor 1401 updates an identifier of the local service center, corresponding to the UE, stored on the network side by using the identifier of the local service center carried in the second reporting information.

Preferred, the second reporting information includes a data transmission request of the UE;
the processor 1401 configures resources for the UE according to the data transmission request, where the resources configured includes transmission attributes of data, a dedicated transmission channel and a mapping relationship between a packet type and a transmission channel.

Based on the same inventive conception, according to a thirteenth embodiment of the present application, a network device is provided, where for specific implementation of the device please refer to descriptions of a local service center in the first embodiment to the fourth embodiment above, which will not be repeated here anymore. As illustrated in Fig.15, the device mainly includes:
a determining module 1501, configured to look for configuration information of a user equipment (UE), determine at least one AP corresponding to the UE, where the configuration information at least includes a corresponding relationship between an identifier of the UE and an identifier of an adjacent access point (AP);
an obtaining module 1502, configured to obtain downlink data; and
a transmitting module 1503, configured to transmit the downlink data to the determined at least one AP so that the determined at least one AP send the downlink data to the UE.

Based on the same inventive conception, according to a fourteenth embodiment of the present application, a network device is provided, where for specific implementation of the device please refer to descriptions of a local service center in the first embodiment to the fourth embodiment above, which will not be repeated here anymore. As illustrated in Fig.16, the device mainly includes: a processor 1601, a transceiver 1602 and a memory 1603, where the processor 1601 is configured to read programs in the memory 1603 to perform the following operations:
looking for configuration information of a user equipment (UE), determining at least one AP corresponding to the UE, where the configuration information at least includes a corresponding relationship of an identifier of the UE and an identifier of an adjacent access point;
obtaining downlink data; and
instructing the transceiver 1602 to send the downlink data to the determined at least one AP, so that the determined at least one AP send the downlink data to the UE.

Based on the above mentioned technical solutions, in the embodiments of the application, at least one AP monitors an uplink signal of UE to obtain first reporting information, which is then reported to a local service center serving the at least one AP, and the local service center provides a communication service for the UE according to the first reporting information. By deploying a large number of APs and local service centers with simplified functions, a more flexible and more complicated access mode is realized, a user's communication requirements could be perceived with a user equipment as the center, and, with a local service center as a mobility anchor and mobility management center, the mobility anchor's position is lowered and signal transmission process is simplified. A network service center performs service strategy management on the local service centers, which simplifies the management function of the core network. Moreover, the interfaces among an AP, a local service center and a network service center are open, able to support flexible access types, complicated amorphous cell structures and heterogeneous multi-layer coverage modes.

It should be appreciated by those skilled in the art that embodiments of the present application may be provided as a method, a system, or a computer program product. Therefore, the present application may take the form of a complete hardware embodiment, a complete software embodiment, or an embodiment combing software and hardware aspects. Moreover, the present application may take the form of a computer program product implemented in one or more computer usable storage media (including but not limited to disk storage or an optical memory) in which computer usable program codes are included.

The present application has been described in a flow chart and/or a block diagram of the method, the device (system) and the computer program product according to the embodiments of the present application. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the present application without departing from the scope of the present application. Thus the present application is also intended to encompass these modifications and variations thereto so long as the modifications and variations come into the scope of the claims appended to the present application.

## Claims

1. A mobile communication method, the mobile communication method is applied to a UE-centred network comprising a plurality of access points, APs, and a local service center, wherein the APs are configured to be an intermediate node to establish mobile communications between user equipments, UEs, between a user equipment, UE and the local service center, and between a UE and an external network, and to provide a radio signal channel for a UE; the local service center equals to a UE-centred local control plane and is configured to be an intermediate node to establish mobile communications between a UE and a network service center, between a UE and an external network, and between UEs, the method comprising:
monitoring (401), by the APs, an uplink signal sent by a UE adjacent to the APs;
obtaining (402), by the APs, first reporting information according to the uplink signal; wherein the first reporting information comprising measuring result of the uplink signal or the first reporting information is the uplink signal; the uplink signal is a registration request signal of the UE or is an uplink detection signal of the UE; and
sending (403), by the APs, the first reporting information to the local service center serving the APs for processing;
the method further comprises:
receiving, by the APs, an instruction of performing a data transmission service for the UE sent by the local service center and/or an instruction of performing a mobility measurement service for the UE sent by the local service center;
receiving (702), by the APs, downlink data sent by the local service center;
sending, by the APs, the downlink data to the UE.

2. The method according to claim 1, wherein if the uplink signal is a registration request signal of the UE;
obtaining (402), by the APs, the first reporting information according to the uplink signal, comprises:
measuring, by the APs, the registration request signal of the UE, and generating, by the APs, the first reporting information according to a measuring result obtained by measuring the registration request signal of the UE and the registration request signal, or generating, by the APs, the first reporting information according to the measuring result obtained by this measuring, a measuring result obtained by previously measuring the uplink signal of the UE and the registration request signal.

3. The method according to claim 1, wherein if the uplink signal is an uplink detection signal of the UE, obtaining (402), by the APs, the first reporting information according to the uplink signal, comprises:
obtaining, by the APs, a measuring result by measuring the uplink detection signal of the UE, and generating, by the APs, the first reporting information according to the measuring result, wherein the first reporting information at least comprises an identifier of the UE and comprises current location information of the UE and/or an identifier of the APs.

4. The method according to claim 3, wherein the current location information of the UE is location information of the current APs which have received the uplink detection signal;
or,
wherein the uplink detection signal is sent by the UE every set time interval, or is sent by the UE when the UE is triggered.

5. The method according to claim 1, wherein if the uplink signal is a data transmission request, the data transmission request carries configuration information requested for protecting data transmission;
obtaining, by the APs, the first reporting information according to the uplink signal, comprises:
determining, by the APs, the data transmission request as the first reporting signal.

6. The method according to any one of claims 2-5, wherein the first reporting information further comprises quality information of a link between the UE and the APs, and relative location information of the UE and the APs.

7. A mobile communication method, the mobile communication method is applied to a UE-centred network comprising a plurality of access points, APs, and a local service center, wherein the APs are configured to be an intermediate node to establish mobile communications between user equipments, UEs, between a user equipment, UE and the local service center, and between a UE and an external network, and to provide a radio signal channel for a UE, the local service center equals to a UE-centred local control plane and is configured to be an intermediate node to establish mobile communications between a UE and a network service center, between a UE and an external network, and between UEs, the method comprising:
receiving (501), by the local service center, first reporting information sent by the APs served by the local service center and adjacent to a UE, wherein the first reporting information is obtained by the APs according to an monitored uplink signal of the UE; wherein the first reporting information comprising measuring result of the uplink signal or the first reporting information is the uplink signal; the uplink signal is a registration request signal of the UE or is an uplink detection signal of the UE ; and
processing (502), by the local service center, the first reporting information;
the method further comprises:
searching (701), by the local service center, configuration information of the UE, and;
determining (701), by the local service center, the APs corresponding to the UE, where the configuration information at least includes a corresponding relationship between an identifier the UE and an identifier of an adjacent AP;
sending, by the local service center, to a part of APs among the APs an instruction of performing a data transmission service for the UE and/or an instruction of performing a mobility measurement service for the UE;
obtaining (702), by the local service center, downlink data;
transmitting (702), by the local service center, downlink data to the determined the APs so that the determined at least one AP transmits the downlink data to the UE.

8. The method according to claim 7, wherein processing, by the local service center, the first reporting information, comprises:
generating, by the local service center, second reporting information according to the first reporting information, comprises:
1) wherein the first reporting information is generated by the APs according to a measuring result obtained by measuring a registration request signal of the UE and the registration request signal, or, generated by the APs according to the measuring result obtained by measuring a registration request signal of the UE, a measuring result obtained by measuring an uplink signal of the UE before the registration request signal, and the registration request signal;
analyzing, by the local service center, the registration request signal to obtain registration information of the UE, and determining, by the local service center, the registration information, an identifier of the local service center and an identifier the UE as the second reporting information;
or,
determining, by the local service center, the first reporting information and the identifier of the local service center as the second reporting information;
2) wherein the first reporting information is a data transmission request of the UE received by the APs, wherein the data transmission request carries configuration information requested for protecting data transmission;
configuring, by the local service center, air interface resources for data transmission for the UE according to the data transmission request or instructing, by the local service center, the APs to configure air interface resources for data transmission, and determining, by the local service center, the data transmission request as the second reporting information;
and
sending, by the local service center, the second reporting information to a network service center, so that the network service center provides a communication service for the UE according to the second reporting information.

9. The method according to claim 8, wherein the first reporting information is generated by the APs according to a measuring result obtained by measuring an uplink detection signal of the UE, wherein the first reporting information at least comprises an identifier of the UE and an identifier of the APs;
processing (502), by the local service center, the first reporting information, comprises:
determining, by the local service center, that configuration information of the UE is locally stored, comparing, by the local service center, an AP set comprised in the configuration information of the UE and an AP set consisting of the APs, and updating, by the local service center, the AP set of the UE in the configuration information to be the AP set consisting of the APs when determining that a preset update condition is satisfied; or, determining, by the local service center, that the configuration information of the UE is not stored locally, configuring, by the local service center, transmission resources for the UE according to the first reporting information and saving, by the local service center, the transmission resources and a set consisting of the APs as the configuration information of the UE;
and,
after determining, by the local service center, that a preset update condition is satisfied, the method further comprises:
re-determining and configuring, by the local service center, transmission resources of the UE according to the AP set consisting of the APs;
the update condition comprise one of the flowing situations:
for an existing AP in the AP set in the configuration information of the UE, if the quality of the link between the existing AP and the UE is lower than a preset threshold, the existing AP is deleted from the AP set;
for an AP outside the AP set in the configuration information of the UE, if the quality of the link between the AP and the UE is higher than a preset threshold, the AP is added into the AP set in the configuration information of the UE;
if the UE's transmission requirement is lower than a preset threshold, any AP whose link quality is lower than a preset threshold in the AP set in the configuration information of the UE is removed;
if the UE's transmission requirement is higher than a preset threshold, and if the quality of the link between an AP outside the AP set in the configuration information of the UE and the UE is higher than a preset threshold, the AP is added into the AP set in the configuration information;
for an AP outside the AP set in the configuration information of the UE, if the AP's load is determined to be lower than a preset threshold according to the AP's load information, the AP is added into the AP set in the configuration information of the UE;
for an existing AP in the AP set in the configuration information of the UE, if the existing AP's load is determined to be higher than a preset threshold according to the existing AP's load information, the existing AP is deleted from the AP set.

10. The method according to claim 7, wherein the first reporting information is generated by the APs according to a measuring result obtained by measuring an uplink detection signal of the UE, wherein the first reporting information at least comprises an identifier of the UE and current location information of the UE;
processing (502), by the local service center, the first reporting information, comprises:
determining, by the local service center, that configuration information of the UE is locally stored, comparing, by the local service center, location information of the UE in the configuration information of the UE and the received current location information of the UE, updating, by the local service center, the location information of the UE in the configuration information to be the current location information of the UE when determining that a location information update condition is satisfied, and re-determining and configuring, by the local service center, transmission resources of the UE;
or,
determining, by the local service center, that the configuration information of the UE is not stored locally, configuring, by the local service center, transmission resources for the UE according to the first reporting information and saving, by the local service center, the transmission resources and the current location information of the UE as the configuration information.

11. The method according to claim 9 or 10, wherein after determining, by the local service center, that the configuration information of the UE is not stored locally, the method further comprises:
sending, by the local service center, its own identifier to a network service center, so that the network service center modifies a locally stored identifier of the local service center corresponding to the UE according to the identifier of the local service center.

12. The method according to claim 9 or 10, wherein the uplink detection signal is sent by the UE every set time interval, or is sent by the UE when the UE is triggered.

13. The method according to claim 7, wherein the first reporting information further comprises quality information of a link between the UE and the APs and the relative location information of the UE and the APs.

## Patentansprüche

1. Ein Mobilkommunikationsverfahren, wobei das Mobilkommunikationsverfahren auf ein Benutzergerät- (User Equipment, UE-) orientiertes Netzwerk mit einer Vielzahl von Zugangspunkten (Access Points), APs, und einem lokalen Servicecenter angewendet wird, wobei die APs als ein Zwischenknoten konfiguriert sind, um Mobilkommunikationen zwischen Benutzergeräten, UEs, zwischen einem Benutzergerät, UE, und dem lokalen Servicecenter sowie zwischen einem UE und einem externen Netzwerk herzustellen, und einen Funksignalkanal für ein UE bereitzustellen; wobei das lokale Servicecenter einer UE-orientierten lokalen Steuerebene entspricht und als ein Zwischenknoten konfiguriert ist, um Mobilkommunikationen zwischen einem UE und einem Netzwerk-Servicecenter, zwischen einem UE und einem externen Netzwerk sowie zwischen UEs herzustellen, wobei das Verfahren Folgendes aufweist:
Überwachen (401), durch die APs, eines Uplink-Signals, das von einem UE angrenzend an die APs gesendet wird;
Erhalten (402), durch die APs, von ersten Berichtsinformationen gemäß dem Uplink-Signal; wobei die ersten Berichtsinformationen ein Messergebnis des Uplink-Signals aufweisen oder die ersten Berichtsinformationen das Uplink-Signal darstellen; wobei das Uplink-Signal ein Registrierungsanfragesignal des UE darstellt oder ein Uplink-Erfassungssignal des UE darstellt; und
Senden (403), durch die APs, der ersten Berichtsinformationen an das lokale Servicecenter, das die APs zur Verarbeitung bedient;
wobei das Verfahren weiterhin Folgendes aufweist:
Empfangen, durch die APs, einer durch das lokale Servicecenter gesendeten Anweisung zur Durchführung eines Datenübertragungsdienstes für das UE, und/oder einer durch das lokale Servicecenter gesendeten Anweisung zur Durchführung eines Mobilitätsmessdienstes für das UE;
Empfangen (702), durch die APs, von durch das lokale Servicecenter gesendeten Downlink-Daten;
Senden, durch die APs, der Downlink-Daten an das UE.

2. Das Verfahren nach Anspruch 1, wobei, wenn das Uplink-Signal ein Registrierungsanfragesignal des UE ist,
Erhalten (402), durch die APs, der ersten Berichtsinformationen gemäß dem Uplink-Signal Folgendes aufweist:
Messen, durch die APs, des Registrierungsanfragesignals des UE, und Erzeugen, durch die APs, der ersten Berichtsinformationen gemäß einem durch Messen des Registrierungsanfragesignals des UE erhaltenen Messergebnis und dem Registrierungsanfragesignal, oder Erzeugen, durch die APs, der ersten Berichtsinformationen gemäß dem durch diese Messung erhaltenen Messergebnis, einem durch vorherige Messung des Uplink-Signals des UE erhaltenen Messergebnis und dem Registrierungsanfragesignal.

3. Das Verfahren nach Anspruch 1, wobei, wenn das Uplink-Signal ein Uplink-Erfassungssignal des UE ist, das Erhalten (402), durch die APs, der ersten Berichtsinformationen gemäß dem Uplink-Signal Folgendes aufweist:
Erhalten, durch die APs, eines Messergebnisses durch Messung des Uplink-Erfassungssignals des UE, und Erzeugen, durch die APs, der ersten Berichtsinformationen gemäß dem Messergebnis, wobei die ersten Berichtsinformationen zumindest eine Kennung des UE aufweisen und aktuelle Standortinformationen des UE und/oder eine Kennung der APs aufweisen.

4. Das Verfahren nach Anspruch 3, wobei die aktuellen Standortinformationen des UE Standortinformationen der aktuellen APs darstellen, welche das Uplink-Erfassungssignal empfangen haben;
oder,
wobei das Uplink-Erfassungssignal durch das UE in jedem festgelegten Zeitintervall gesendet wird oder durch das UE gesendet wird, wenn das UE aktiviert wird.

5. Das Verfahren nach Anspruch 1, wobei, wenn das Uplink-Signal eine Datenübertragungsanfrage ist, die Datenübertragungsanfrage Konfigurationsinformationen enthält, die zum Schutz von Datenübertragung angefordert werden;
Erhalten, durch die APs, der ersten Berichtsinformationen gemäß dem Uplink-Signal Folgendes aufweist:
Bestimmen, durch die APs, der Datenübertragungsanfrage als das erste Berichtssignal.

6. Das Verfahren nach einem der Ansprüche 2 bis 5, wobei die ersten Berichtsinformationen weiterhin Qualitätsinformationen einer Verbindung zwischen dem UE und den APs sowie relative Standortinformationen des UE und der APs aufweisen.

7. Ein Mobilkommunikationsverfahren, welches Mobilkommunikationsverfahren auf ein UE-orientiertes Netzwerk mit einer Vielzahl von Zugangspunkten, APs, und einem lokalen Servicecenter angewendet wird, wobei die APs als ein Zwischenknoten konfiguriert sind, um Mobilkommunikationen zwischen Benutzergeräten, UEs, zwischen einem Benutzergerät, UE, und dem lokalen Servicecenter sowie zwischen einem UE und einem externen Netzwerk herzustellen, und um einen Funksignalkanal für ein UE bereitzustellen, das lokale Servicecenter einer UE-orientierten lokalen Steuerebene entspricht und als ein Zwischenknoten konfiguriert ist, um Mobilkommunikationen zwischen einem UE und einem Netzwerk-Servicecenter, zwischen einem UE und einem externen Netzwerk sowie zwischen UEs herzustellen, wobei das Verfahren Folgendes aufweist:
Empfangen (501), durch das lokale Servicecenter, von ersten Berichtsinformationen, die von den durch das lokale Servicecenter bedienten und an ein UE angrenzenden APs gesendet werden, wobei die ersten Berichtsinformationen durch die APs gemäß einem überwachten Uplink-Signal des UE erhalten werden; wobei die ersten Berichtsinformationen ein Messergebnis des Uplink-Signals aufweisen oder die ersten Berichtsinformationen das Uplink-Signal darstellen; das Uplink-Signal ein Registrierungsanfragesignal des UE ist oder ein Uplink-Erfassungssignal des UE ist; und
Verarbeiten (502), durch das lokale Servicecenter, der ersten Berichtsinformationen;
wobei das Verfahren weiterhin Folgendes aufweist:
Suchen (701), durch das lokale Servicecenter, von Konfigurationsinformationen des UE, und
Bestimmen (701), durch das lokale Servicecenter, der APs entsprechend dem UE, wobei die Konfigurationsinformationen zumindest eine entsprechende Beziehung zwischen einer Kennung des UE und einer Kennung eines angrenzenden AP enthalten;
Senden, durch das lokale Servicecenter, an einen Teil von APs aus den APs eine Anweisung zur Durchführung eines Datenübertragungsdienstes für das UE und/oder eine Anweisung zur Durchführung eines Mobilitätsmessdienstes für das UE;
Erhalten (702), durch das lokale Servicecenter, von Downlink-Daten;
Übertragen (702), durch das lokale Servicecenter, von Downlink-Daten an die bestimmten APs, so dass der bestimmte mindestens eine AP die Downlink-Daten an das UE überträgt.

8. Das Verfahren nach Anspruch 7, wobei das Verarbeiten, durch das lokale Servicecenter, der ersten Berichtsinformationen Folgendes aufweist:
Erzeugen, durch das lokale Servicecenter, von zweiten Berichtsinformationen gemäß den ersten Berichtsinformationen, aufweisend:
1) wobei die ersten Berichtsinformationen durch die APs gemäß einem durch die Messung eines Registrierungsanfragesignals des UE erhaltenen Messergebnis und dem Registrierungsanfragesignal erzeugt werden, oder durch die APs gemäß dem durch Messung eines Registrierungsanfragesignals des UE erhaltenen Messergebnis, einem durch Messung eines Uplink-Signals des UE vor dem Registrierungsanfragesignal erhaltenen Messergebnis und dem Registrierungsanfragesignal erzeugt werden;
Analysieren, durch das lokale Servicecenter, des Registrierungsanfragesignals, um Registrierungsinformationen des UE zu erhalten, und Bestimmen, durch das lokale Servicecenter, der Registrierungsinformationen, einer Kennung des lokalen Servicecenters und einer Kennung des UE als die zweiten Berichtsinformationen;
oder
Bestimmen, durch das lokale Servicecenter, der ersten Berichtsinformationen und der Kennung des lokalen Servicecenters als die zweiten Berichtsinformationen;
2) wobei die ersten Berichtsinformationen eine durch die APs empfangene Datenübertragungsanfrage des UE darstellen, wobei die Datenübertragungsanfrage Konfigurationsinformationen enthält, die zum Schutz von Datenübertragung angefordert werden;
Konfigurieren, durch das lokale Servicecenter, von Luftschnittstellenressourcen zur Datenübertragung für das UE gemäß der Datenübertragungsanfrage oder Anweisen, durch das lokale Servicecenter, der APs, Luftschnittstellenressourcen zur Datenübertragung zu konfigurieren, sowie Bestimmen, durch das lokale Servicecenter, der Datenübertragungsanfrage als die zweiten Berichtsinformationen;
und
Senden, durch das lokale Servicecenter, der zweiten Berichtsinformationen an ein Netzwerk-Servicecenter, so dass das Netzwerk-Servicecenter einen Kommunikationsdienst für das UE gemäß den zweiten Berichtsinformationen bereitstellt.

9. Das Verfahren nach Anspruch 8, wobei die ersten Berichtsinformationen durch die APs gemäß einem durch Messung eines Uplink-Erfassungssignals des UE erhaltenen Messergebnis erzeugt werden, wobei die ersten Berichtsinformationen zumindest eine Kennung des UE und eine Kennung der APs aufweisen;
das Verarbeiten (502), durch das lokale Servicecenter, der ersten Berichtsinformationen Folgendes aufweist:
Bestimmen, durch das lokale Servicecenter, dass Konfigurationsinformationen des UE lokal gespeichert werden, Vergleichen, durch das lokale Servicecenter, eines AP-Satzes, der in den Konfigurationsinformationen des UE enthalten ist, und einen AP-Satz bestehend aus den APs, sowie Aktualisieren, durch das lokale Servicecenter, des AP-Satzes des UE in den Konfigurationsinformationen als den AP-Satz bestehend aus den APs, wenn bestimmt wird, dass eine vorgegebene Aktualisierungsbedingung erfüllt ist; oder Bestimmen, durch das lokale Servicecenter, dass die Konfigurationsinformationen des UE nicht lokal gespeichert werden, Konfigurieren, durch das lokale Servicecenter, von Übertragungsressourcen für das UE gemäß den ersten Berichtsinformationen sowie Sichern, durch das lokale Servicecenter, der Übertragungsressourcen und eines aus den APs bestehenden Satzes als die Konfigurationsinformationen des UE;
und
nach dem Bestimmen, durch das lokale Servicecenter, dass eine vorgegebene Aktualisierungsbedingung erfüllt ist, das Verfahren weiterhin Folgendes aufweist:
Neubestimmen und Konfigurieren, durch das lokale Servicecenter, von Übertragungsressourcen des UE gemäß dem aus den APs bestehenden AP-Satz; die Aktualisierungsbedingung eine der nachfolgenden Situationen aufweist:
bei einem bestehenden AP in dem AP-Satz in den Konfigurationsinformationen des UE wird, falls die Qualität der Verbindung zwischen dem bestehenden AP und dem UE geringer als ein vorgegebener Schwellenwert ist, der bestehende AP aus dem AP-Satz gelöscht;
bei einem AP außerhalb des AP-Satzes in den Konfigurationsinformationen des UE wird, falls die Qualität der Verbindung zwischen dem AP und dem UE höher als ein vorgegebener Schwellenwert ist, der AP in den AP-Satz in den Konfigurationsinformationen des UE eingefügt;
falls die Übertragungsanforderung des UE geringer als ein vorgegebener Schwellenwert ist, wird jeder AP, dessen Verbindungsqualität geringer als ein vorgegebener Schwellenwert ist, in dem AP-Satz in den Konfigurationsinformationen des UE entfernt;
falls die Übertragungsanforderung des UE höher als ein vorgegebener Schwellenwert ist und falls die Qualität der Verbindung zwischen einem AP außerhalb des AP-Satzes in den Konfigurationsinformationen des UE und dem UE höher als ein vorgegebener Schwellenwert ist, wird der AP in den AP-Satz in den Konfigurationsinformationen eingefügt;
bei einem AP außerhalb des AP-Satzes in den Konfigurationsinformationen des UE wird, falls bestimmt wird, dass die Last des AP geringer als ein vorgegebener Schwellenwert gemäß den Lastinformationen des AP ist, der AP in den AP-Satz in den Konfigurationsinformationen des UE eingefügt;
bei einem bestehenden AP in dem AP-Satz in den Konfigurationsinformationen des UE wird, falls bestimmt wird, dass die Last des bestehenden AP höher als ein vorgegebener Schwellenwert gemäß den bestehenden Lastinformationen des AP ist, der bestehende AP aus dem AP-Satz gelöscht.

10. Das Verfahren nach Anspruch 7, wobei die ersten Berichtsinformationen durch die APs gemäß einem durch Messung eines Uplink-Erfassungssignals des UE erhaltenen Messergebnis erzeugt werden, wobei die ersten Berichtsinformationen zumindest eine Kennung des UE und aktuelle Standortinformationen des UE aufweisen;
das Verarbeiten (502), durch das lokale Servicecenter, der ersten Berichtsinformationen Folgendes aufweist:
Bestimmen, durch das lokale Servicecenter, dass Konfigurationsinformationen des UE lokal gespeichert werden, Vergleichen, durch das lokale Servicecenter, von Standortinformationen des UE in den Konfigurationsinformationen des UE und den empfangenen aktuellen Standortinformationen des UE, Aktualisieren, durch das lokale Servicecenter, der Standortinformationen des UE in den Konfigurationsinformationen als die aktuellen Standortinformationen des UE, wenn bestimmt wird, dass ein Aktualisierungszustand der Standortinformationen erfüllt ist, sowie Neubestimmen und Konfigurieren, durch das lokale Servicecenter, von Übertragungsressourcen des UE;
oder
Bestimmen, durch das lokale Servicecenter, dass die Konfigurationsinformationen des UE nicht lokal gespeichert werden, Konfigurieren, durch das lokale Servicecenter, von Übertragungsressourcen für das UE gemäß den ersten Berichtsinformationen und Sichern, durch das lokale Servicecenter, der Übertragungsressourcen und der aktuellen Standortinformationen des UE als die Konfigurationsinformationen.

11. Das Verfahren nach Anspruch 9 oder 10, wobei nach dem Bestimmen, durch das lokale Servicecenter, dass die Konfigurationsinformationen des UE nicht lokal gespeichert werden, das Verfahren weiterhin Folgendes aufweist:
Senden, durch das lokale Servicecenter, seiner eigenen Kennung an ein Netzwerk-Servicecenter, so dass das Netzwerk-Servicecenter eine lokal gespeicherte Kennung des lokalen Servicecenters entsprechend dem UE gemäß der Kennung des lokalen Servicecenters ändert.

12. Das Verfahren nach Anspruch 9 oder 10, wobei das Uplink-Erfassungssignal durch das UE in jedem festgelegten Zeitintervall gesendet wird, oder durch das UE gesendet wird, wenn das UE aktiviert wird.

13. Das Verfahren nach Anspruch 7, wobei die ersten Berichtsinformationen weiterhin Qualitätsinformationen einer Verbindung zwischen dem UE und den APs sowie die relativen Standortinformationen des UE und der APs aufweisen.

## Revendications

1. Procédé de communication mobile, le procédé de communication mobile étant appliqué à un réseau centré UE comportant une pluralité de points d'accès, AP, et un centre de services local, dans lequel les AP sont configurés pour être un nœud intermédiaire pour établir des communications mobiles entre des équipements d'utilisateur, UE, entre un équipement d'utilisateur, UE, et le centre de services local, et entre un UE et un réseau externe, et pour fournir un canal de signal radio pour un UE ; le centre de services local équivaut à un plan de commande local centré UE et est configuré pour être un nœud intermédiaire pour établir des communications mobiles entre un UE et un centre de services de réseau, entre un UE et un réseau externe, et entre des UE, le procédé comportant les étapes consistant à :
surveiller (401), par les AP, un signal de liaison montante envoyé par un UE adjacent aux AP ;
obtenir (402), par les AP, des premières informations de compte-rendu en fonction du signal de liaison montante ;
dans lequel les premières informations de compte-rendu comportent un résultat de mesure du signal de liaison montante ou les premières informations de compte-rendu sont le signal de liaison montante ; le signal de liaison montante est un signal de demande d'enregistrement de l'UE ou est un signal de détection de liaison montante de l'UE ; et
envoyer (403), par les AP, les premières informations de compte-rendu au centre de services local desservant les AP en vue d'un traitement ;
le procédé comporte en outre les étapes consistant à :
recevoir, par les AP, une instruction d'exécution d'un service de transmission de données pour l'UE envoyée par le centre de services local et/ou une instruction d'exécution d'un service de mesure de la mobilité pour l'UE envoyée par le centre de services local ;
recevoir (702), par les AP, des données de liaison descendante envoyées par le centre de services local ;
envoyer, par les AP, les données de liaison descendante à l'UE.

2. Procédé selon la revendication 1, dans lequel si le signal de liaison montante est un signal de demande d'enregistrement de l'UE, l'obtention (402), par les AP, des premières informations de compte-rendu en fonction du signal de liaison montante, comporte l'étape consistant à :
mesurer, par les AP, le signal de demande d'enregistrement de l'UE, et générer, par les AP, les premières informations de compte-rendu en fonction d'un résultat de mesure obtenu en mesurant le signal de demande d'enregistrement de l'UE et le signal de demande d'enregistrement, ou générer, par les AP, les premières informations de compte-rendu en fonction du résultat de mesure obtenu par cette mesure, un résultat de mesure obtenu en mesurant précédemment le signal de liaison montante de l'UE et le signal de demande d'enregistrement.

3. Procédé selon la revendication 1, dans lequel si le signal de liaison montante est un signal de détection de liaison montante de l'UE, l'obtention (402), par les AP, des premières informations de compte-rendu en fonction du signal de liaison montante, comporte l'étape consistant à :
obtenir, par les AP, un résultat de mesure en mesurant le signal de détection de liaison montante de l'UE, et générer, par les AP, les premières informations de compte-rendu en fonction du résultat de mesure, dans lequel les premières informations de compte-rendu comportent au moins un identifiant de l'UE et comportent des informations de localisation actuelle de l'UE et/ou un identifiant des AP.

4. Procédé selon la revendication 3, dans lequel les informations de localisation actuelle de l'UE sont des informations de localisation des AP qui ont reçu le signal de détection de liaison montante ;
ou,
dans lequel le signal de détection de liaison montante est envoyé par l'UE à chaque intervalle de temps réglé, ou est envoyé par l'UE lorsque l'UE est déclenché.

5. Procédé selon la revendication 1, dans lequel si le signal de liaison montante est une demande de transmission de données, la demande de transmission de données transporte des informations de configuration demandées pour protéger la transmission de données,
l'obtention, par les AP, des premières informations de compte-rendu en fonction du signal de liaison montante comporte l'étape consistant à :
déterminer, par les AP, la demande de transmission de données comme étant le premier signal de compte-rendu.

6. Procédé selon l'une quelconque des revendications 2 à 5, dans lequel les premières informations de compte-rendu comportent en outre des informations sur la qualité d'une liaison entre l'UE et les AP, et des informations de localisation relative de l'UE et des AP.

7. Procédé de communication mobile, le procédé de communication mobile étant appliqué à un réseau centré UE comportant une pluralité de points d'accès, AP, et un centre de services local, dans lequel les AP sont configurés pour être un nœud intermédiaire pour établir des communications mobiles entre des équipements d'utilisateur, UE, entre un équipement d'utilisateur, UE, et le centre de services local, et entre un UE et un réseau externe, et pour fournir un canal de signal radio pour un UE, le centre de services local équivaut à un plan de commande local centré UE et est configuré pour être un nœud intermédiaire pour établir des communications mobiles entre un UE et un centre de services de réseau, entre un UE et un réseau externe, et entre des UE, le procédé comportant les étapes consistant à :
recevoir (501), par le centre de services local, des premières informations de compte-rendu envoyées par les AP desservis par le centre de services local et adjacents à un UE, dans lequel les premières informations de compte-rendu sont obtenues par les AP en fonction d'un signal de liaison montante surveillé de l'UE ; dans lequel les premières informations de compte-rendu comportant un résultat de mesure du signal de liaison montante ou les premières informations de compte rendu sont le signal de liaison montante ; le signal de liaison montante est un signal de demande d'enregistrement de l'UE ou est un signal de détection de liaison montante de l'UE ; et
traiter (502), par le centre de services local, les premières informations de compte-rendu ;
le procédé comporte en outre les étapes consistant à :
rechercher (701), par le centre de services local, des informations de configuration de l'UE, et ;
déterminer (701), par le centre de services local, les AP correspondant à l'UE, où les informations de configuration incluent au moins une relation correspondante entre un identifiant de l'UE et un identifiant d'un AP adjacent ;
envoyer, par le centre de services local, à une partie des AP parmi les AP une instruction d'exécution d'un service de transmission de données pour l'UE et/ou une instruction d'exécution d'un service de mesure de la mobilité pour l'UE ;
obtenir (702), par le centre de services local, des données de liaison descendante ;
transmettre (702), par le centre de services local, des données de liaison descendante aux AP déterminés de sorte que le au moins un AP déterminé transmet les données de liaison descendante à l'UE.

8. Procédé selon la revendication 7, dans lequel le traitement, par le centre de services local, des premières informations de compte-rendu comporte l'étape consistant à :
générer, par le centre service local, des secondes informations de compte-rendu en fonction des premières informations de compte-rendu,
1) dans lequel les premières informations de compte-rendu sont générées par les AP en fonction d'un résultat de mesure obtenu en mesurant un signal de demande d'enregistrement de l'UE et le signal de demande d'enregistrement, ou, généré par les AP en fonction du résultat de mesure obtenu en mesurant un signal de demande d'enregistrement de l'UE, un résultat de mesure obtenu en mesurant un signal de liaison montante de l'UE avant le signal de demande d'enregistrement, et le signal de demande d'enregistrement ;
analyser, par le centre de services local, le signal de demande d'enregistrement pour obtenir des informations d'enregistrement de l'UE, et déterminer, par le centre de services local, les informations d'enregistrement, un identifiant du centre de services local et un identifiant de l'UE comme étant les secondes informations de compte-rendu ;
ou,
déterminer, par le centre de services local, les premières informations de compte-rendu et l'identifiant du centre de services local comme étant les secondes informations de compte-rendu ;
2) dans lequel les premières informations de compte-rendu sont une demande de transmission de données de l'UE reçue par les AP, dans lequel la demande de transmission de données transporte des informations de configuration demandées pour protéger la transmission de données ; configurer, par le centre de services local, des ressources d'interface radio en vue d'une transmission de données pour l'UE en fonction de la demande de transmission de données ou ordonner, par le centre de services local, aux AP de configurer des ressources d'interface radio en vue d'une transmission de données, et déterminer, par le centre de services local, la demande de transmission de données comme étant les secondes informations de compte-rendu ;
et
envoyer, par le centre de services local, les secondes informations de compte-rendu à un centre de services de réseau, de sorte que le centre de services de réseau fournit un service de communication pour l'UE en fonction des secondes informations de compte-rendu.

9. Procédé selon la revendication 8, dans lequel les premières informations de compte-rendu sont générées par les AP en fonction d'un résultat de mesure obtenu en mesurant un signal de détection de liaison montante de l'UE, dans lequel les premières informations de compte-rendu comportent au moins un identifiant de l'UE et un identifiant des AP ;
le traitement (502), par le centre de services local, des premières informations de compte-rendu, comporte les étapes consistant à :
déterminer, par le centre de services local, que des informations de configuration de l'UE sont stockées localement, comparer, par le centre de services local, un ensemble d'AP compris dans les informations de configuration de l'UE et un ensemble d'AP constitué des AP, et mettre à jour, par le centre de services local, l'ensemble d'AP de l'UE dans les informations de configuration comme étant l'ensemble d'AP constitué des AP lors de la détermination qu'une condition de mise à jour prédéfinie est satisfaite ; ou, déterminer, par le centre de services local, que les informations de configuration de l'UE ne sont pas stockées localement, configurer, par le centre de services local, des ressources de transmission pour l'UE en fonction des premières informations de compte-rendu et enregistrer, par le centre de services local, les ressources de transmission et un ensemble constitué des AP comme étant les informations de configuration de l'UE ;
et,
après la détermination, par le centre de services local, qu'une condition de mise à jour prédéfinie est satisfaite, le procédé comporte en outre l'étape consistant à :
re-déterminer et configurer, par le centre de services local, des ressources de transmission de l'UE en fonction de l'ensemble d'AP constitué des AP ;
la condition de mise à jour comporte l'une des situations suivantes :
pour un AP existant dans l'ensemble d'AP dans les informations de configuration de l'UE, si la qualité de la liaison entre l'AP existant et l'UE est inférieure à un seuil prédéfini, l'AP existant est supprimé de l'ensemble d'AP ;
pour un AP en dehors de l'ensemble d'AP dans les informations de configuration de l'UE, si la qualité de la liaison entre l'AP et l'UE est supérieure à un seuil prédéfini, l'AP est ajouté dans l'ensemble d'AP dans les informations de configuration de l'UE ;
si l'exigence de transmission de l'UE est inférieure à un seuil prédéfini, tout AP dont la qualité de liaison est inférieure à un seuil prédéfini dans l'ensemble d'AP dans les informations de configuration de l'UE est retiré ;
si l'exigence de transmission de l'UE est supérieure à un seuil prédéfini, et si la qualité de la liaison entre un AP en dehors de l'ensemble d'AP dans les informations de configuration de l'UE et l'UE est supérieure à un seuil prédéfini, l'AP est ajouté dans l'ensemble d'AP dans les informations de configuration ;
pour un AP en dehors de l'ensemble d'AP dans les informations de configuration de l'UE, si la charge de l'AP est déterminée comme étant inférieure à un seuil prédéfini d'après les informations de charge de l'AP, l'AP est ajouté dans l'ensemble d'AP dans les informations de configuration de l'UE ;
pour un AP existant dans l'ensemble d'AP dans les informations de configuration de l'UE, si la charge de l'AP existant est déterminée comme étant supérieure à un seuil prédéfini d'après les informations de charge de l'AP existant, l'AP existant est supprimé de l'ensemble d'AP.

10. Procédé selon la revendication 7, dans lequel les premières informations de compte-rendu sont générées par les AP en fonction d'un résultat de mesure obtenu en mesurant un signal de détection de liaison montante de l'UE, dans lequel les premières informations de compte-rendu comportent au moins un identifiant de l'UE et des informations de localisation actuelle de l'UE ;
le traitement (502), par le centre de services local, des premières informations de compte-rendu, comporte les étapes consistant à :
déterminer, par le centre de services local, que des informations de configuration de l'UE sont stockées localement, comparer, par le centre de services local, des informations de localisation de l'UE dans les informations de configuration de l'UE et les informations de localisation actuelle reçues de l'UE, mettre à jour, par le centre de services local, les informations de localisation de l'UE dans les informations de configuration comme étant les informations de localisation actuelle de l'UE lors de la détermination qu'une condition de mise à jour d'informations de localisation est satisfaite, et re-déterminer et configurer, par le centre de services local, des ressources de transmission de l'UE ;
ou,
déterminer, par le centre de services local, que les informations de configuration de l'UE ne sont pas stockées localement, configurer, par le centre de services local, des ressources de transmission pour l'UE en fonction des premières informations de compte-rendu et enregistrer, par le centre de services local, les ressources de transmission et les informations de localisation actuelle de l'UE comme étant les informations de configuration.

11. Procédé selon la revendication 9 ou 10, dans lequel après la détermination, par le centre de services local, que les informations de configuration de l'UE ne sont pas stockées localement, le procédé comporte en outre l'étape consistant à :
envoyer, par le centre de services local, son propre identifiant à un centre de services de réseau, de sorte que le centre de services de réseau modifie un identifiant stocké localement du centre de services local correspondant à l'UE en fonction de l'identifiant du centre de services local.

12. Procédé selon la revendication 9 ou 10, dans lequel le signal de détection de liaison montante est envoyé par l'UE à chaque intervalle de temps réglé, ou est envoyé par l'UE lorsque l'UE est déclenché.

13. Procédé selon la revendication 7, dans lequel les premières informations de compte-rendu comportent en outre des informations sur la qualité d'une liaison entre l'UE et les AP, et les informations de localisation relative de l'UE et des AP.
